(19) **Europäisches Patentamt / European Patent Office / Office européen des brevets**

(11) **EP 2 775 665 B1**

(12) **EUROPEAN PATENT SPECIFICATION**

(45) Date of publication and mention of the grant of the patent:
**31.07.2019   Bulletin 2019/31**

(21) Application number: **12844701.8**

(22) Date of filing: **30.01.2012**

(51) Int Cl.:
**H04W 4/38** *(2018.01)*          **G06F 16/245** *(2019.01)*
**H04L 29/08** *(2006.01)*          **H04L 12/26** *(2006.01)*
**H04Q 9/00** *(2006.01)*           **G06F 16/22** *(2019.01)*
**G06F 16/248** *(2019.01)*

(86) International application number:
**PCT/JP2012/051922**

(87) International publication number:
**WO 2013/065327 (10.05.2013 Gazette 2013/19)**

(54) **NODE DEVICE GROUP, NETWORK SYSTEM AND METHOD FOR TRANSMITTING AND RECEIVING SENSOR DATA**

GRUPPE AUS KNOTENVORRICHTUNGEN, NETZWERKSYSTEM UND VERFAHREN ZUM SENDEN UND EMPFANGEN VON SENSORDATEN

GROUPE DE DISPOSITIFS FORMANT NOEUDS, SYSTÈME DE RÉSEAU, ET PROCÉDÉ POUR LA TRANSMISSION ET LA RÉCEPTION DE DONNÉES DE CAPTEURS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.11.2011   JP 2011242577**

(43) Date of publication of application:
**10.09.2014   Bulletin 2014/37**

(73) Proprietor: **Omron Corporation Kyoto-shi, Kyoto 600-8530 (JP)**

(72) Inventor: **TAKENAKA, Hideki Kyoto-shi Kyoto 600-8530 (JP)**

(74) Representative: **Kilian Kilian & Partner Aidenbachstraße 54 81379 München (DE)**

(56) References cited:
**JP-A- H05 207 046      JP-A- 2003 115 093**
**JP-A- 2009 021 939      US-A1- 2008 112 326**

- **MADDEN S ET AL: "TAG: A Tiny Agregation Service for AdHoc Sensor Networks", (CONFERENCE INFO: OSDI),, 11 December 2002 (2002-12-11), pages 131-146, XP008091295,**

**Description**

TECHNICAL FIELD

The present invention relates to a network system and a method for transmitting and receiving sensor data, and more particularly to a network system which includes a plurality of node devices and sensor devices each connected to corresponding one of the node devices via wireless communication or wired communication and a method for transmitting and receiving sensor data.

The present invention also relates to a node device group and a computer apparatus included in the network system.

BACKGROUND ART

As an example of this type of network system, there is conventionally known a system in which a data processing server as a computer apparatus is communicatively connected to first to third sensor terminals as a plurality of node devices via a network and each of the sensor terminals is accessible by one or more sensor devices via wireless communication as described in Fig. 36 of Patent Document 1 (Japanese Patent Laid-open Publication No. 2003-85213).

PRIOR ART DOCUMENT

PATENT DOCUMENT

Patent Document 1: Japanese Patent Laid-open Publication No. 2003-85213

SUMMARY OF THE INVENTION

PROBLEMS TO BE SOLVED BY THE INVENTION

In the above described network system, for example, each of the sensor terminals acquires sensor data from the sensor device which is connected to the sensor terminal and saves the sensor data in a sensor data storage section included in the sensor terminal. The above described data processing server makes an information acquisition request by specifying the sensor data from any of the one or more sensor devices and acquires the sensor data from any of the plurality of sensor terminals via the network.

However, in the above described network system, when desired sensor data is saved in the plurality of sensor terminals, the data processing server needs to spend time in specifying each of the plurality of sensor terminals before making the information acquisition request. Besides, when a new sensor terminal is to be added to the network system, information about the sensor terminals needs to be updated in the data processing server, which is troublesome.

Madden S et al: "TAG: a Tiny AGgregation Service for Ad-Hoc Sensor Networks", (Conference Info: OSDI), 11 December 2002 (2002-12-11), pages 131-146, XP008091295, discloses a sensor network system comprising an Ad-Hoc sensor network of motes which are in communication with each other by radio, which is used as a broadcast medium, in order to perform the self-organization of the Ad-Hoc sensor network in a tree-based routing scheme. This disclosure, however, does not offer any improvement for the non-Ad-Hoc sensor network system of the present invention where the computer apparatus and the plurality of node devices are communicatively connected to each other via a network.

Accordingly, an object of the present invention is to provide a network system which includes a plurality of node devices connected to a computer apparatus via a network and sensor devices connected to each of the node devices wherein the computer apparatus can make an information acquisition request to the node devices in a short time by a simple process.

Another object of the present invention is to provide a node device group and the computer apparatus included in the network system and a method for transmitting and receiving the sensor data.

SOLUTIONS TO THE PROBLEMS

The invention is defined by a node device group according to claim 1 and a method according to claim 8. Further embodiments are defined by the dependent claims.

In this description, the term "computer apparatus" widely refers to computers can communicate via a network whether they are called a client device, a server device, or a host computer.

The term "network" widely refers to networks such as a local area network (LAN), a wide area network (WAN), or the Internet whether they are wired or wireless.

In addition to the plurality of node devices (each of which is accessible by one or more sensor devices via wireless communication or wired communication), a node device inaccessible by the sensor device (for example, a dummy node device) may be connected to the network.

Also, in addition to the plurality of node devices (each of which has the sensor data search section), a node device which does not have the sensor data search section may be connected to the network.

The term "sensor device" widely refers to devices with sensing functions whether they form a sensor node or not.

In the network system according to the present invention, the computer apparatus makes the information acquisition request to any of the plurality of node devices. That is, the computer apparatus makes an information acquisition request by specifying the sensor data from any one or more of the one or more sensor devices via the network. The sensor data search section of the node device to which the information acquisition request was made searches the sensor data storage sections of the plurality of node devices for the sensor data according to the information acquisition request and acquires the sensor data. Then, the information transmission section of the node device transmits the sensor data acquired by the sensor data search section to the computer apparatus.

As a result, when the computer apparatus makes the information acquisition request to the node device, the computer apparatus only needs to make the information acquisition request to any of the plurality of node devices. Then, the computer apparatus neither needs to specify each of the plurality of node devices before making the information acquisition request nor needs to maintain information including which one of the node devices saves the desired sensor data. Therefore, the computer apparatus can make the information acquisition request to the node devices in a short time by the simple process. Further, any special software program and setting are not required for the computer apparatus and the information acquisition request can be made by a general-purpose computer apparatus.

In the network system according to an embodiment, each of the plurality of node devices has a calculation section for getting calculation result data by performing a calculation based on the sensor data acquired by the sensor data search section, the computer apparatus makes the information acquisition request by specifying the calculation result data, and the information transmission section of the node device which holds the calculation result data specified by the computer apparatus transmits the calculation result data to the computer apparatus.

In the network system according to the embodiment, the information transmission section of the node device to which the information acquisition request was made transmits the calculation result data calculated by the calculation section to the computer apparatus. Therefore, the computer apparatus can access the calculation result data by neither taking trouble nor spending time in performing a calculation based on the sensor data acquired by the sensor data search section.

In the network system according to an embodiment, each of the plurality of node devices has a first graph creation section for creating a graph based on the sensor data acquired by the sensor data search section, the computer apparatus makes the information acquisition request by specifying data of the graph, and the information transmission section of the node device which holds the data of the graph specified by the computer apparatus transmits the data of the graph to the computer apparatus.

In the network system according to the embodiment, the information transmission section of the node device to which the information acquisition request was made transmits the data of the graph created by the first graph creation section to the computer apparatus. Therefore, the computer apparatus can access the data of the graph by neither taking trouble nor spending time in creating the graph based on the sensor data acquired by the sensor data search section.

In the network system according to an embodiment, each of the node devices has a second graph creation section for creating a graph based on the calculation result data calculated by the calculation section, the computer apparatus makes the information acquisition request by specifying data of the graph, and the information transmission section of the node device which holds the data of the graph specified by the computer apparatus transmits the data of the graph to the computer apparatus.

In the network system according to the embodiment, the information transmission section of the node device to which the information acquisition request was made transmits the data of the graph created by the second graph creation section on the basis of the calculation result data to the computer apparatus. Therefore, the computer apparatus can access the data of the graph by neither taking trouble nor spending time in creating the graph based on the calculation result data.

In the network system according to an embodiment, the computer apparatus makes a first information acquisition request to a first node device among the plurality of node devices and concurrently makes a second information acquisition request different from the first information acquisition request to a second node device different from the first node device.

In the network system according to the embodiment, the computer apparatus makes the first information acquisition request to the first node device among the plurality of node devices and concurrently makes the second information acquisition request different from the first information acquisition request to the second node device different from the first node device. As a result, the embodiment can distribute the loads among the plurality of node devices. Therefore, the embodiment can improve the performance of the whole network system.

The term "load" on the node device in this description widely refers to the utilization rate of a CPU (central processing unit) in the node device, the number and the amount of the sensor data managed by the node device, the number of times that the node device returns the sensor data to the computer apparatus within the above described time period, the number of times that the node device processes the sensor data within the above described time period, and the like.

The network system according to an embodiment further comprises: a node load detection section for detecting a load on each of the node devices every certain period of time, and a load leveling section for switching the node device that received the information acquisition request to a proper node device for responding to the information acquisition request to level out the loads among the plurality of node devices.

In the network system according to the embodiment, the node load detection section detects a load on each of the node devices every certain period of time. Then, the load leveling section switches the node device to respond to the information acquisition request from the node device that received the information acquisition request to the proper node device for responding to the information acquisition request to level out the loads among the plurality of node devices. Specifically, the proper node device for responding to the information acquisition request is the node device with the smallest load or the node device with the load below a threshold value. As a result, the embodiment can level out the loads among the plurality of node devices. Therefore, the embodiment can improve the performance of the whole network system. For example, the embodiment can avoid a situation in which any of the plurality of node devices has a trouble in responding to the request made by the computer apparatus with the sensor data. Further, the network system can always keep good performance even if the amount of calculation undertaken by any of the node devices, the network traffic, and the number of sensor data collected by each of the sensor devices change every moment.

In the network system according to an embodiment, the load leveling section includes a decision section provided for each of the plurality of node devices, and the decision section provided for a third node device and the decision section provided for a fourth node device among the plurality of node devices make a decision about switching the node device to respond to the information acquisition request between the third node device and the fourth node device to level out the loads between the third node device and the fourth node device.

In the network system according to the embodiment, the load leveling section includes the decision section provided for each of the plurality of node devices. The decision section provided for the third node device and the decision section provided for the third node device among the plurality of node devices make a decision about switching the node device to respond to the information acquisition request between the third node device and the fourth node device to level out the loads between the third node device and the fourth node device. According to the decision, the node device to respond to the information acquisition request is switched between the third node device and the fourth node device. Therefore, even if any of the plurality of node devices is broken down, for example, the network system can make a decision without interruption by using the node device other than the broken node device since the function is not concentrated in a particular one of the node devices. Further, even if any of the plurality of node devices is replaced by a new model node device, the network system can promptly carry out the changeover since the new model node device is not required to have a particular function different from that of the other node devices.

In the network system according to an embodiment, the computer apparatus comprises: a fault detection section for detecting a fault in a connection between the computer apparatus and the node device to which the information acquisition request was made; and an information acquisition request switch section for stopping to make the information acquisition request to the node device to which the information acquisition request was made and making the information acquisition request to any of the plurality of node devices other than the node device to which the information acquisition request was made, when the fault detection section detected the fault.

In the network system according to the embodiment, the fault detection section detects a fault in the connection between the computer apparatus and the node device to which the information acquisition request was made. When the fault detection section detected the fault, the information acquisition request switch section stops to make the information acquisition request to the node device to which the information acquisition request was made and makes the information acquisition request to any of the plurality of node devices other than the node device to which the information acquisition request was made. Therefore, even if the fault is detected, the information acquisition request switch section can switch the node device to which the information acquisition request was made to any of the plurality of node devices other than the node device to which the information acquisition request was made and automatically make the information acquisition request to any of the plurality of node devices other than the node device to which the information acquisition request was made. As a result, fault-tolerance can be realized.

In the network system according to an embodiment, the fault detection section determines that the fault occurred when data was not transmitted from the information transmission section within a predetermined time period after the information acquisition request was made.

In the network system according to the embodiment, when data was not transmitted from the information transmission section within a predetermined time period after the information acquisition request was made, the fault detection section determines that the fault occurred. As a result, the network system can more certainly detect the fault.

In the network system comprising the node device group according to claim 10 of the present invention, the computer apparatus makes the information acquisition request to any of the plurality of node devices. That is, the computer apparatus makes an information acquisition request by specifying the sensor data from any one or more of the one or more sensor devices via the network. The sensor data search section of the node device to which the information acquisition request was made searches the sensor data storage sections of the plurality of node devices for the sensor data according to the information acquisition request and acquires the sensor data. Then, the information transmission section of the node device transmits the sensor data acquired by the sensor data search section to the computer apparatus.

As a result, when the computer apparatus made the information acquisition request to the node device, the computer apparatus only needs to make the information acquisition request to any of the plurality of node devices. Then, the computer apparatus neither needs to specify each of the plurality of node devices before making the information acquisition request nor needs to maintain information including which one of the node devices saves the desired sensor data. Therefore, the computer apparatus can make the information acquisition request to the node devices in a short time by the simple process. Further, any special software program and setting are not required for the computer apparatus and the information acquisition request can be made by a general-purpose computer apparatus.

In the network system including the computer, the computer apparatus makes the information acquisition request to any of the plurality of node devices. That is, the computer apparatus makes an information acquisition request by specifying the sensor data from any one or more of the one or more sensor devices via the network. The sensor data search section of the node device to which the information acquisition request was made searches the sensor data storage sections of the plurality of node devices for the sensor data according to the information acquisition request and acquires the sensor data. Then, the information transmission section of the node device transmits the sensor data acquired by the sensor data search section to the computer apparatus.

As a result, when the computer apparatus made the information acquisition request to the node device, the computer apparatus only needs to make the information acquisition request to any of the plurality of node devices. Then, the computer apparatus neither needs to specify each of the plurality of node devices before making the information acquisition request nor needs to maintain information including which one of the node devices saves the desired sensor data. Therefore, the computer apparatus can make the information acquisition request to the node devices in a short time by the simple process. Further, any special software program and setting are not required for the computer apparatus and the information acquisition request can be made by a general-purpose computer apparatus.

In the method for transmitting and receiving sensor data, the computer apparatus makes the information acquisition request to any of the plurality of node devices. That is, the computer apparatus makes an information acquisition request by specifying the sensor data from any one or more of the one or more sensor devices via the network. The sensor data search section of the node device to which the information acquisition request was made searches the sensor data storage sections of the plurality of node devices for the sensor data according to the information acquisition request and acquires the sensor data. Then, the information transmission section of the node device transmits the sensor data acquired by the sensor data search section to the computer apparatus.

As a result, when the computer apparatus made the information acquisition request to the node device, the computer apparatus only needs to make the information acquisition request to any of the plurality of node devices to make the information acquisition request to the node devices. Then, the computer apparatus neither needs to specify each of the plurality of node devices before issuing the information acquisition request nor needs to maintain information including which one of the node devices saves the desired sensor data. Therefore, the computer apparatus can make the information acquisition request to the node devices in a short time by the simple process. Further, any special software program and setting are not required for the computer apparatus and the information acquisition request can be made by a general-purpose computer apparatus.

EFFECTS OF THE INVENTION

As is apparent from the above description, according to the network system, the node device group, the computer apparatus, and the method for transmitting and receiving sensor data of the present invention, it is possible to realize a network system allows the computer apparatus to make an information acquisition request to the node devices in a short time by a simple process.

BRIEF DESCRIPTION OF THE DRAWINGS

Fig. 1 is a diagram illustrating a schematic configuration of a network system according to an embodiment of the present invention.

Fig. 2 is a diagram illustrating a block configuration of a client PC (personal computer) included in the network system.

Fig. 3 is a diagram illustrating a block configuration of a node device included in the network system.

Fig. 4 is a diagram illustrating a block configuration of a sensor device included in the network system.

Fig. 5 is a diagram illustrating constituent elements from the viewpoint of functionality of a CPU and a memory included in the node device in a first configuration example of the network system.

Fig. 6 is a diagram illustrating constituent elements from the viewpoint of functionality of a memory included in the sensor device in the first configuration example.

Fig. 7 is a diagram describing operation of the client PC for acquiring sensor data in the first configuration example.

Fig. 8 is a diagram describing operation of the client PC for acquiring results of the temperature-humidity index calculation in a second configuration example of the network system.

Fig. 9 is a table showing the sensor data needed by the node device to calculate the temperature-humidity indices and the results of the temperature-humidity index calculation in the second configuration example.

Fig. 10 is a diagram describing operation of the client PC for acquiring graphs showing time series variations of the electric energies in the second configuration example.

Fig. 11A is a table showing data sections needed by the node device to create graphs showing time series variations of the electric energies in the second configuration example.

Fig. 11B is a graph showing the time series variations of the electric energies created by the node device in the second configuration example.

Fig. 12 is a diagram illustrating constituent elements from the viewpoint of functionality of a CPU and a memory included in the node device in the second configuration example.

Fig. 13 is a diagram illustrating constituent elements from the viewpoint of functionality of a CPU (central processing section) included in the client PC in a third configuration example of the network system.

Fig. 14 is a diagram illustrating operation when a fault occurred in a connection between the client PC and the node device to which the information acquisition request was made by the client PC.

EMBODIMENTS OF THE INVENTION

The present invention will be described in detail by embodiments illustrated in the drawings.

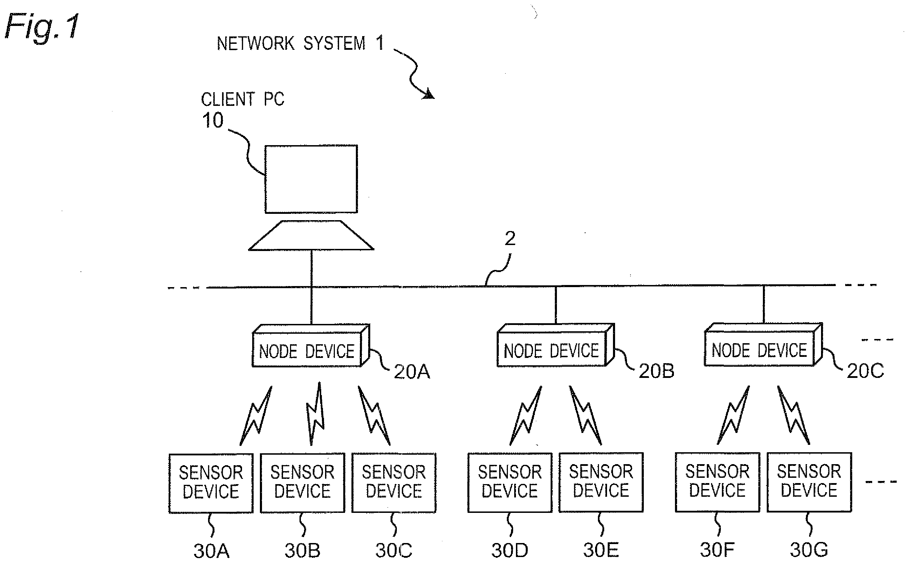

Fig. 1 is a diagram illustrating a schematic configuration of a network system (the entire system is denoted by a reference symbol 1) according to an embodiment of the present invention.

The network system 1 includes a client PC (personal computer) 10 as a computer apparatus and a plurality of node devices 20A, 20B, 20C, ... as a node device group. The client PC 10 and the node devices 20A, 20B, 20C, ... are communicatively connected to each other via a LAN (local area network) 2 as a network. Each of the plurality of node devices 20A, 20B, 20C, ... is accessible by one or more sensor devices 30A, 30B, 30C, 30D, 30E, 30F, 30G, ... via wireless communication (in this example, Wi-Fi (registered trademark) as a wireless LAN).

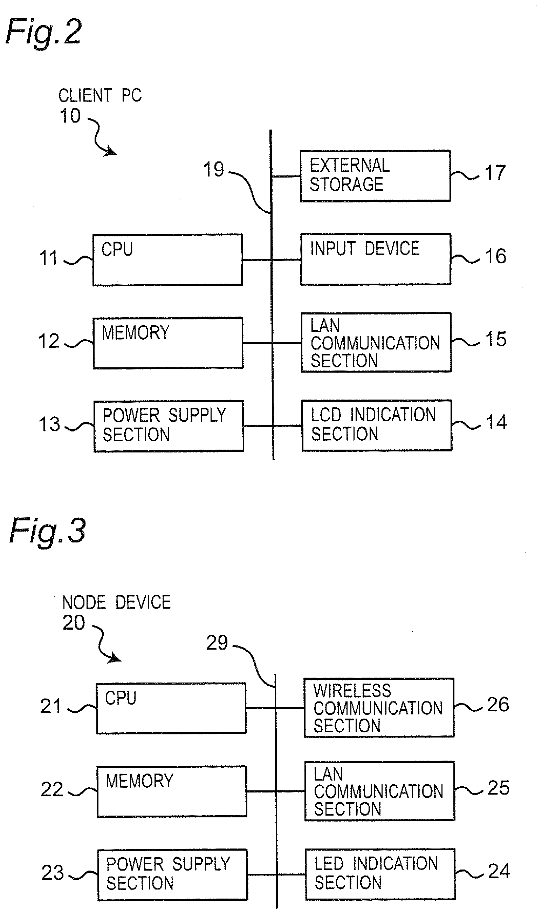

As illustrated in a block configuration of Fig. 2, the client PC 10 includes a CPU (central processing unit) 11, a memory 12, a power supply section 13, an LCD (liquid crystal display element) indication section 14 as a display section, a LAN communication section 15, an input device 16 as an input section, and an external storage 17. These constituent elements 11, 12, 13, 14, 15, 16, and 17 are communicatively connected to each other via wiring 19. The CPU 11 controls the operation of the entire client PC 10. The memory 12 includes a DRAM (dynamic random access memory) and stores various types of data. The power supply section 13 supplies the power to the respective constituent elements 11, 12, 13, 14, 15, 16, and 17 at a constant voltage (5V, 12V, or the like). The LCD indication section 14 displays respective images according to the control by the CPU 11. The LAN communication section 15 functions to allow the client PC 10 to communicate with the node devices 20A, 20B, 20C, ..., and other (not shown) computer apparatuses, terminal devices, and the like via the LAN 2. The input device 16 includes a keyboard and a mouse and functions to allow a user to input various types of information and instructions to the client PC 10. The external storage 17 includes a hard disk drive and an optical disk and stores an operating system (OS) and application software (program) for the client PC 10.

As illustrated in a block configuration of Fig. 3, each of the node devices 20 (denoted by a common reference symbol 20 for representing the node devices 20A, 20B, 20C, ...) includes a CPU 21, a memory 22, a power supply section 23, an LED (light-emitting diode) indication section 24, a LAN communication section 25 as an information transmission section, and a wireless communication section 26. These constituent elements 21, 22, 23, 24, 25, and 26 are communicatively connected to each other via wiring 29. In this example, the CPU 21 operates at a clock frequency of 1.1GHz and controls the operation of the entire node device 20. In this example, the memory 22 includes a flash memory and a DRAM (with a storage capacity of 512 MB) and stores an OS (in this example, Linux (registered trademark)), a program, and various types of data for the node device 20. The power supply section 23 supplies the power to the respective constituent elements 21, 22, 23, 24, 25, and 26 at a constant voltage (in this example, 5V). While the power is supplied by the power supply section 23 to the constituent elements, the LED indication section 24 lights the LED (not shown) to indicate that the node device 20 is active. The LAN communication section 25 functions to allow the node

6

device 20 to communicate with the client PC 10, the other node devices, and other (not shown) computer apparatuses, terminal devices, and the like via the LAN 2. The wireless communication section 26 functions to allow the node device 20 to communicate with the sensor devices 30A, 30B, 30C, ... via the wireless LAN. In this example, a maximum of 64 sensor devices can connect to each of the node devices 20 via the wireless LAN.

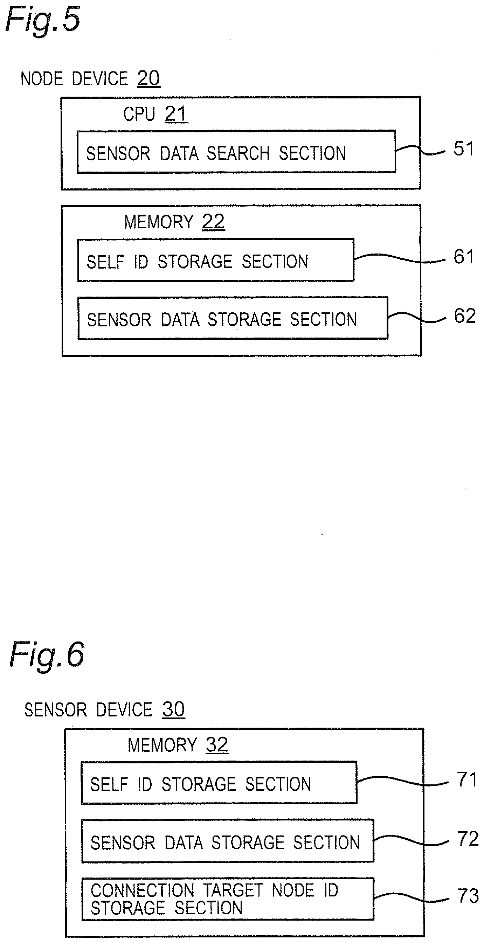

As illustrated in Fig. 5, the memory 22 of each of the node devices 20 has a self-ID storage section 61 which stores an identification number (ID) for identifying the node device 20 for the wireless LAN connection. A sensor data storage section 62 stores a sensor data from the sensor device which is connected to the node device 20 via the wireless LAN.

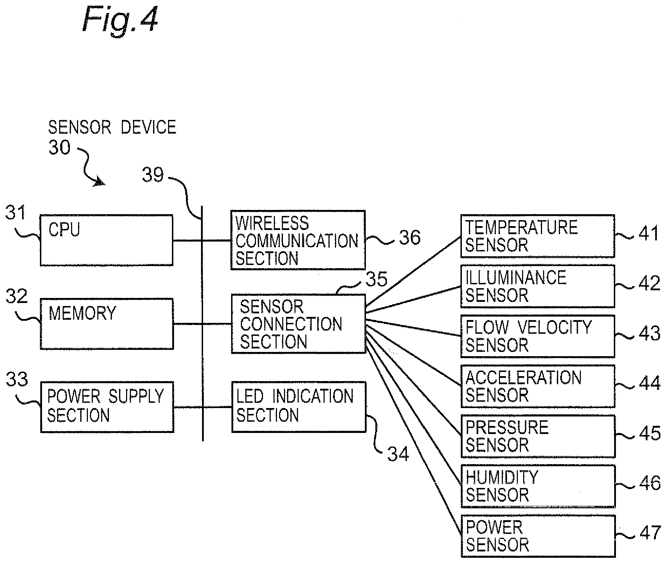

As illustrated in a block configuration of Fig. 4, each of the sensor devices 30 (denoted by a common reference symbol 30 for representing the sensor devices 30A, 30B, 30C, ...) includes a CPU 31, a memory 32, a power supply section 33, an LED indication section 34, a sensor connection section 35, and a wireless communication section 36. These constituent elements 31, 32, 33, 34, 35, and 36 are communicatively connected to each other via wiring 39. According to the purpose of the sensor device 30, one or some or all of a temperature sensor 41, an illuminance sensor 42, a flow velocity sensor 43, an acceleration sensor 44, a pressure sensor 45, a humidity sensor 46, and a power sensor 47 are connected to the sensor connection section 35. The sensors 41, 42, 43, 44, 45, 46, and 47 may be contained in a casing of the sensor device 30 or attached to the outside of the casing of the sensor device 30. The CPU 31 controls the operation of the entire sensor device 30. In this example, the memory 32 includes a flash memory and a DRAM and stores a program and various types of data for the sensor device 30. The power supply section 33 supplies the power to the respective constituent elements 31, 32, 34, 35, and 36 and the sensors 41, 42, 43, 44, 45, 46, and 47 at a constant voltage (in this example, 3 V). The LED indication section 34 includes a plurality of LEDs (not shown) and lights or flashes the respective LEDs according to the control by the CPU 31. As a result, the LED indication section 34 indicates the respective states such as whether the power supply of the sensor device 30 is on or off and whether the sensor device 30 is in wireless communication with any of the node devices 20A, 20B, 20C, .... The sensor connection section 35 functions to capture a sensor data from the sensor(s) which is connected to the sensor connection section 35 among the temperature sensor 41, the illuminance sensor 42, the flow velocity sensor 43, the acceleration sensor 44, the pressure sensor 45, the humidity sensor 46, and the power sensor 47 into the sensor device 30 which includes the sensor connection section 35. As a result, the sensor device 30 autonomously acquires the sensor data without receiving any particular instruction from outside. The wireless communication section 36 functions to allow the sensor device 30 which includes the wireless communication section 36 to communicate with any of the node devices 20A, 20B, 20C, ... via the wireless LAN.

As illustrated in Fig. 6, the memory 32 of each of the sensor devices 30 has a self-ID storage section 71 which stores an identification number (ID) for identifying the sensor device 30 of the memory 32 for the wireless LAN connection. A sensor data storage section 72 stores the sensor data which has been captured into the sensor device 30. A connection target node ID storage section 73 stores an identification number (ID) of the node device (any one of the node devices 20A, 20B, 20C, ...) which is to be connected with the sensor device 30 via wireless communication.

In the example of Fig. 1, the three sensor devices 30A, 30B, and 30C are connected to the node device 20A via the wireless LAN but are not connected to the other node devices 20B, 20C, .... The two sensor devices 30D and 30E are connected to the node device 20B via the wireless LAN but are not connected to the other node devices 20A, 20C, .... The two sensor devices 30F, 30G, ... are connected to the node device 20C via the wireless LAN but are not connected to the other node devices 20A, 20B, ....

According to such a connection configuration, the node device 20A acquires the sensor data from the sensor devices 30A, 30B, and 30C which are connected to the node device 20A via the wireless LAN and saves the sensor data in (the sensor data storage section 62 of) the memory 22 included in the node device 20A. The node device 20B acquires the sensor data from the sensor devices 30D and 30E which are connected to the node device 20B via the wireless LAN and saves the sensor data in the memory 22 included in the node device 20B. Also, the node device 20C acquires the sensor data from the sensor devices 30F and 30G which are connected to the node device 20C via the wireless LAN and saves the sensor data in the memory 22 included in the node device 20C. Each of the node devices 20A, 20B, 20C, ... never directly receives the sensor data from the sensor device which is not connected to itself.

The client PC 10 makes an information acquisition request via the LAN 2 by specifying the sensor data from any one or more of the one or more sensor devices 30A, 30B, 30C, ... or the calculation result data acquired on the basis of the sensor data.

As described as one of the problems of the conventional art, when the information acquisition request is to be made, in case that the desired sensor data is saved, for example, in the plurality of node devices 20A, 20B, 20C, ..., there is a problem of taking time for the client PC 10 to need to make the information acquisition request by specifying each of the plurality of node devices. Besides, when a new node device is to be added to the network system, there is a problem of requiring additional work for the client PC 10 to need to be updated.

(First Configuration Example)

In a first configuration example of the present network system 1, from the viewpoint of functionality, the CPU 21 of each of the node devices 20 has a sensor data search section 51 as illustrated in Fig. 5 (The sensor data search section 51 is implemented as a software program.).

The sensor data search section 51 of each of the node devices 20 searches the sensor data storage section 62 of each of the node devices 20A, 20B, 20C, ... for the sensor data according to the information acquisition request from the client PC 10 and acquires the sensor data. Then, the LAN communication section 25 (see Fig. 3) of each of the node devices 20 transmits the sensor data acquired by the sensor data search section 51 to the client PC 10. Further, the LAN communication section 25 transmits the sensor data to the client PC 10.

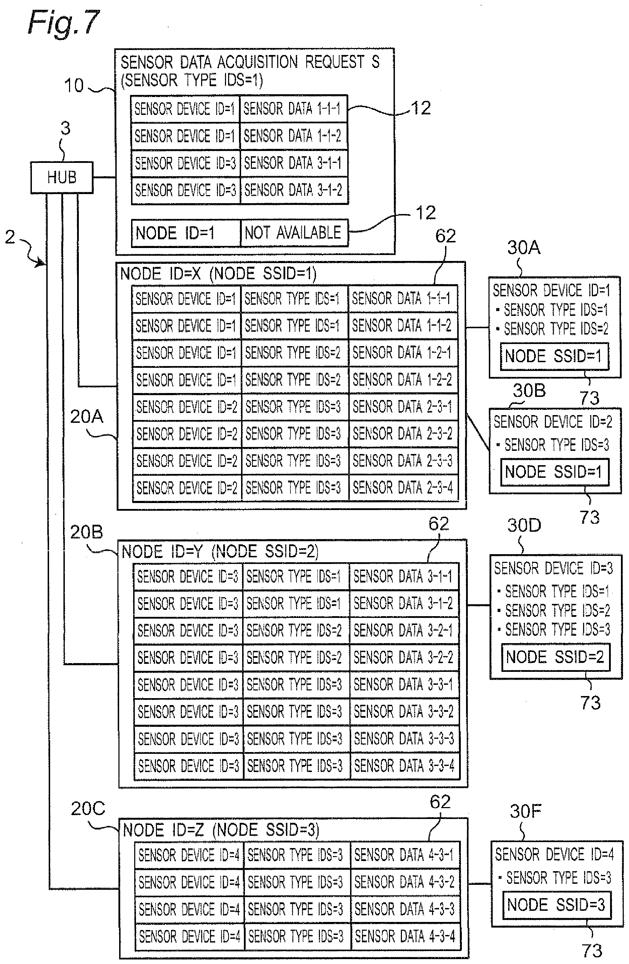

Now, processes from the issuance of a sensor data acquisition request S by the client PC 10 to transmission of the sensor data to the client PC 10 will be described in detail with reference to Fig. 7 (The reference symbols in Figs. 4, 5 and 6 will be used as required.).

As illustrated in Fig. 7, it is assumed that the ID of the node device 20A is X (NODE ID = X), the ID of the node device 20B is Y (NODE ID = Y), and the ID of the node device 20C is Z (NODE ID = Z). It is also assumed that a service set identifier (SSID) of the node device 20A is 1 (NODE SSID = 1), the SSID of the node device 20B is 2 (NODE SSID = 2), and the SSID of the node device 20C is 3 (NODE SSID = 3).

It is also assumed that the ID of the sensor device 30A is 1 (sensor device ID = 1), the ID of the sensor device 30B is 2 (sensor device ID = 2), the ID of the sensor device 30D is 3 (sensor device ID = 3), and the ID of the sensor device 30F is 4 (sensor device ID = 4). To the sensor device 30A, the temperature sensor 41 and the humidity sensor 46 are connected. The power sensor 47 is connected to the sensor device 30B. The temperature sensor 41, the humidity sensor 46, and the power sensor 47 are connected to the sensor device 30D. The power sensor 47 is connected to the sensor device 30F. Here, it is also assumed that a sensor type ID of the temperature sensor 41 is 1 (IDS = 1), the sensor type ID of the humidity sensor 46 is 2 (IDS = 2), and the sensor type ID of the power sensor 47 is 3 (IDS = 3).

The sensor devices 30A and 30B which store "NODE SSID = 1" in the connection target node ID storage sections 73 are connected to the node device 20A via the wireless LAN. The sensor device 30D which stores "NODE SSID = 2" in the connection target node ID storage section 73 is connected to the node device 20B via the wireless LAN. Further, the sensor device 30F which stores "NODE SSID = 3" in the connection target node ID storage section 73 is connected to the node device 20C via the wireless LAN. Via the LAN 2 and a HUB 3, the node devices 20A, 20B, and 20C are connected to each other and also to the client PC 10.

First, the sensor devices 30A, 30B, 30D, and 30F take measurements to acquire the sensor data every fixed period and transmit the sensor data to the respective node devices the sensor devices 30A, 30B, 30D, and 30F are connected to via the wireless LAN.

Then, the node devices 20A, 20B, and 20C acquire the sensor data and save them in the respective sensor data storage sections 62 of the memories 22. For example, in the sensor data storage section 62 of the node device 20A, "sensor data 1-1-1" and "sensor data 1-1-2" which have been acquired by the sensor corresponding to "sensor type IDS = 1" of the sensor device 30A corresponding to "sensor device ID = 1" are saved. Also, in the sensor data storage section 62 of the node device 20A, "sensor data 1-2-1" and "sensor data 1-2-2" which have been acquired by the sensor corresponding to "sensor type IDS = 2" of the sensor device 30A corresponding to "sensor device ID = 1" are saved. Further, in the sensor data storage section 62 of the node device 20A, "sensor data 2-3-1", "sensor data 2-3-2", "sensor data 2-3-3", and "sensor data 2-3-4" which have been acquired by the sensor corresponding to "sensor type IDS = 3" of the sensor device 30B corresponding to "sensor device ID = 2" are saved. Here, the three numbers after "sensor data" indicate, from the left to right in order, the sensor device ID of the sensor device which has acquired the sensor data, the sensor type IDS of the sensor data, and the order the sensor data has been measured. Also in the sensor data storage sections 62 of the node devices 20B and 20C, the sensor data which have been acquired by the sensor device 30D corresponding to "sensor device ID = 3" and the sensor data which have been acquired by the sensor device 30F corresponding to "sensor device ID = 4" are saved as illustrated in Fig. 7.

In that state, the client PC 10 makes the sensor data acquisition request S to, for example, the node device 20A (NODE ID = X) to request the node device 20A to acquire all of the sensor data of the sensor type "1" (IDS = 1) which have been acquired by the plurality of node devices 20A, 20B, 20C, ... from each of the sensor devices 30. Since the node device 20A stores "NODE ID = X" in the self-ID storage section 61, the node device 20A responds to the sensor data acquisition request S. Specifically, in response to the sensor data acquisition request S, the sensor data search section 51 of the node device 20A searches for the sensor data of "IDS = 1" saved in the sensor data storage section 62 while issuing the sensor data acquisition request S to the other node devices 20B and 20C.

The sensor data search section 51 of the node device 20A acquires "sensor data 1-1-1" and "sensor data 1-1-2" from the sensor data storage section 62. On the other hand, in response to the sensor data acquisition request S made by the node device 20A, the node device 20B transmits "sensor data 3-1-1" and "sensor data 3-1-2" in the sensor data storage section 62 to the node device 20A via the LAN communication section 25. Yet on the other hand, since the node device 20C does not save the sensor data which meets the sensor data acquisition request S made by the node device 20A in the sensor data storage section 62, the node device 20C transmits a reply "NOT AVAILABLE" to the node device 20A via the LAN communication section 25.

Then, the LAN communication section 25 of the node device 20A transmits "sensor data 1-1-1" and "sensor data 1-1-2", "sensor data 3-1-1" and "sensor data 3-1-2", and "NODE ID = Z, NOT AVAILABLE" to the client PC 10. These data sections are acquired by the memory 12 of the client PC 10.

As a result, the client PC 10 only needs to make the information acquisition request to any of the plurality of node devices 20A, 20B, 20C, ... (in the above example, the node device 20A) to make the information acquisition request to the node devices. Then, the client PC 10 neither needs to specify each of the plurality of node devices 20A, 20B, 20C, ... before issuing the information acquisition request nor needs to maintain information about which ones of the node devices save the desired sensor data. Therefore, the client PC 10 can make the information acquisition request to the node devices in a short time by the simple process. Further, any special software program and setting are not required for the client PC 10 and the information acquisition request can be made by a general-purpose computer apparatus such as the client PC 10.

(Second Configuration Example)

Now, a second configuration example of the network system 1 will be described.

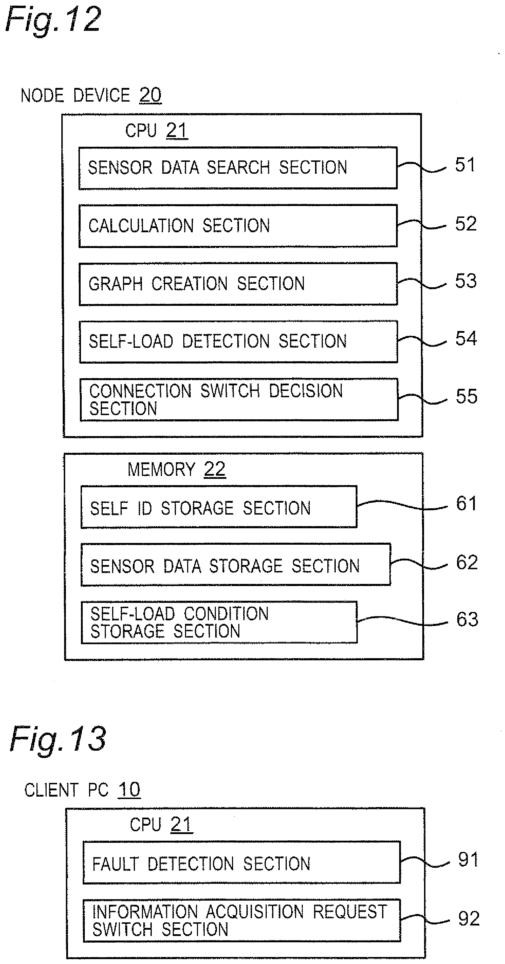

Fig. 12 illustrates constituent elements from the viewpoint of functionality of the CPU 21 and the memory 22 included in the node device 20 in the second configuration example of the network system 1. In Fig. 12, the same constituent elements as those in Fig. 5 are denoted by the same reference numbers as those in Fig. 5 and their description will be omitted.

In the second configuration example, from the viewpoint of functionality, the CPU 21 of each of the node devices 20 has a calculation section 52, a graph creation section 53 as the first graph creation section and the second graph creation section, a self-load detection section 54, and a connection switch decision section 55 as illustrated in Fig. 12 (The calculation section 52, the graph creation section 53, the self-load detection section 54, and the connection switch decision section 55 are implemented as software programs.). The memory 22 of each of the node devices 20 has a self-load condition storage section 63. The calculation section 52 and the graph creation section 53 will be described later.

Every certain period of time, the self-load detection section 54 in each of the node devices 20 detects the load on the node device 20. In this example, the self-load detection section 54 detects mean values $C_{11}$, $C_{12}$, ... of the utilization rate of the CPU 21 included in the node device 20 for respective time slots $\Box t_1$, $\Box t_2$, ... of five minutes each as the certain period as the load on the node device 20 (The utilization rate of the CPU 21 may range from 0% to 100% inclusive according to the operation situation.). Then, the self-load detection sections 54 of the plurality of node devices 20A, 20B, 20C, ... collectively function as a node load detection section in synchronization with each other to detect the loads on the node devices 20A, 20B, 20C, ... for the respective time slots $\Box t_1$, $\Box t_2$, ....

The self-load condition storage section 63 of each of the node devices 20 stores the detected load on the node device 20 which includes the self-load condition storage section 63. Then, the self-load condition storage sections 63 of the plurality of node devices 20A, 20B, 20C, ... are synchronized with each other to store the loads on the node devices 20A, 20B, 20C, ... for the respective time slots $\Box t_1$, $\Box t_2$, ....

In this example, it is assumed that the utilization rate (mean value) of the CPU of the node device 20A as the third node device which receives the information acquisition request among the plurality of node devices 20A, 20B, 20C, ... in Fig. 1 is above the upper limit (in this example, 70%) whereas the utilization rate (mean value) of the CPU of the node device 20B as the fourth node device which does not receive the information acquisition request is below the lower limit (in this example, 30%).

In that case, the connection switch decision section 55 (see Fig. 12) provided for the node device 20A and the connection switch decision section 55 provided for the node device 20B inform each other of the self-load conditions stored in the respective self-load condition storage sections 63 and make a decision about switching the node device to respond to the information acquisition request between the node device 20A and the node device 20B to level out the loads between the node device 20A and the node device 20B. In this example, the connection switch decision sections 55 switch the node device to respond to the information acquisition request from the node device 20A which receives the information acquisition request to the node device 20B which has the smallest load. As a result, the configuration can level out the loads among the plurality of node devices (in the above example, between the node device 20A and the node device 20B).

Further, the node device 20B which is set as the node device to respond to the information acquisition request and another node device (for example, 20D) inform each other of their self-load conditions and make a decision about switching the node device to respond to the information acquisition request between the node device 20C and the node device 20D to level out the loads between the node device 20C and the node device 20D. In that manner, the decision about switching the node device to respond to the information acquisition request between the two node devices was made one after the other.

Consequently, the configuration can improve the performance of the whole of the network system 1. For example, the configuration can avoid a situation in which any of the plurality of node devices 20A, 20B, 20C, ... has a trouble in replying to the client PC 10. Further, the network system 1 can always keep good performance even if the condition of the radio wave for the wireless communication, the network traffic, and the number of sensor data collected by each sensor device change every moment.

That is, the network system 1 can equalize the response times, otherwise the client PC 10 requesting the data may obtain a prompt response in some situations but not in others. Therefore, the user can more easily make a work plan.

Further, since the network system 1 can effectively level out the loads among the plurality of node devices 20A, 20B, 20C, ..., the user does not need to previously set a target of the information acquisition request among the plurality of node devices 20A, 20B, 20C, ... before the information acquisition request was made. Therefore, the user can easily achieve the information acquisition.

Further, even if any of the plurality of node devices 20A, 20B, 20C, ... is broken down, for example, the network system 1 can make the decision without interruption by using the node device other than the broken node device since the function is not concentrated in a particular node device. Still further, even if any of the plurality of node devices 20A, 20B, 20C, ... is replaced by a new model node device, the network system 1 can promptly carry out the changeover since the new model node device is not required to have a particular function different from that of the other node devices.

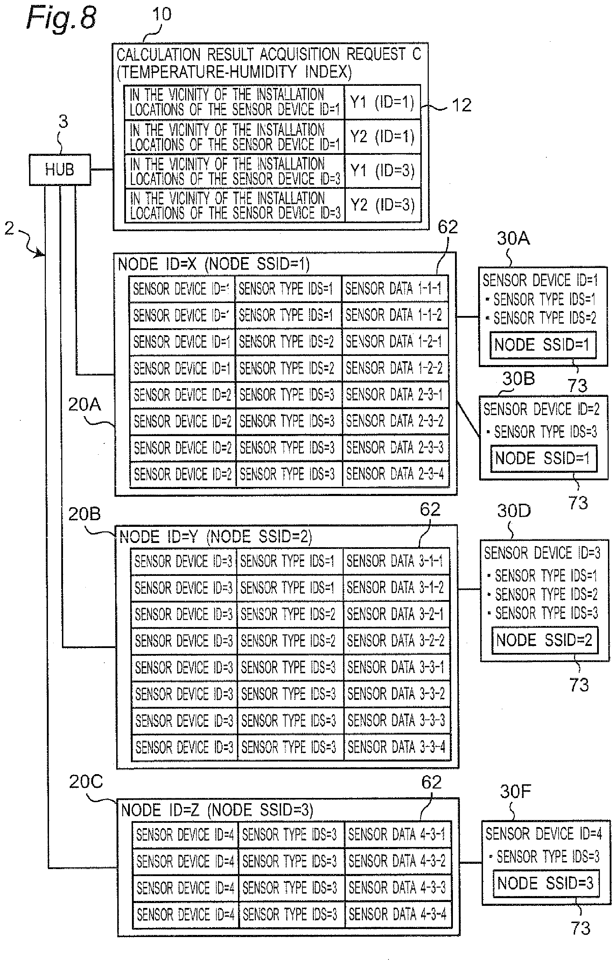

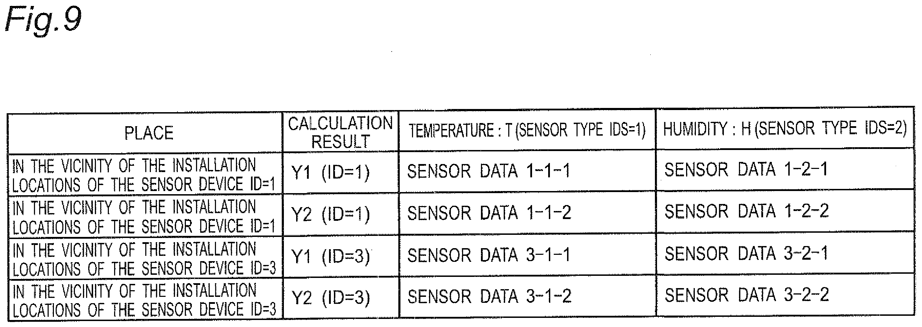

Now, a case that the client PC 10 requests and acquires the calculation result data from the node device by operating the calculation section 52 illustrated in Fig. 12 will be described with reference to Figs. 8 and 9 (The reference symbols in Figs. 4, 6, and 12 will be used as required).

The calculation section 52 of each of the node devices 20 gets the calculation result data to meet the information acquisition request by performing a calculation based on the sensor data acquired by the sensor data search section 51. Then, the LAN communication section 25 (see Fig. 3) of each of the node devices 20 transmits the calculation result data calculated by the calculation section 52 based on the sensor data acquired by the sensor data search section 51 to the client PC 10.

As illustrated in Fig. 8, the sensor devices 30A, 30B, 30D, and 30F, the node devices 20A, 20B, and 20C, and the client PC 10 are connected in the same manner as illustrated in Fig. 7. The sensor data storage sections 62 of the node devices 20A, 20B, and 20C save the sensor data in the same manner as illustrated in Fig. 7.

In that state, the client PC 10 makes a calculation result acquisition request C as the first information acquisition request to, for example, the node device 20A (NODE ID = X) as the first node device for temperature-humidity index in the vicinity of the installation locations of the sensor device 30A (sensor device ID = 1) and the sensor device 30D (sensor device ID = 3). Specifically, the client PC 10 specifies the sensor data (temperature: T) of the sensor type "1" (IDS = 1) and the sensor data (humidity: H) of the sensor type "2" (IDS = 2) and makes the calculation result acquisition request C for the temperature-humidity index acquired on the basis of these sensor data. The arithmetic equation for calculating the temperature-humidity index is shown below.

$$Y = 0.81T + 0.01H\,(0.99T - 14.3) + 46.3 \qquad (1)$$

In response to the calculation result acquisition request C, the sensor data search section 51 of the node device 20A searches for the sensor data corresponding to "IDS = 1" and "IDS = 2" from "sensor ID = 1" and "sensor ID = 3", respectively, saved in the sensor data storage section 62 while issuing the sensor data acquisition request S to the other node devices 20B and 20C.

The sensor data search section 51 of the node device 20A acquires "sensor data 1-1-1", "sensor data 1-1-2", "sensor data 1-2-1", and "sensor data 1-2-2" from the sensor data storage section 62. On the other hand, in response to the sensor data acquisition request S made by the node device 20A, the node device 20B transmits "sensor data 3-1-1", "sensor data 3-1-2", "sensor data 3-2-1", and "sensor data 3-2-2" saved in the sensor data storage section 62 to the node device 20A via the LAN communication section 25. Yet on the other hand, since the node device 20C does not save the sensor data which meets the sensor data acquisition request S made by the node device 20A in the sensor data storage section 62, the node device 20C transmits a reply "NOT AVAILABLE" to the node device 20A via the LAN communication section 25.

Next, based on the sensor data acquired by the sensor data search section 51, the calculation section 52 of the node device 20A calculates the temperature-humidity index by using the above equation (1). In this example, the calculation section 52 finds a calculation result Y1 (ID = 1) for the temperature-humidity index in the vicinity of the installation location of the sensor device 30A based on "sensor data 1-1-1" and "sensor data 1-2-1" as shown in Fig. 9. Also, the calculation section 52 finds a calculation result Y2 (ID = 1) for the temperature-humidity index based on "sensor data 1-1-2" and "sensor data 1-2-2". Further, the calculation section 52 finds the calculation result Y1 (ID = 3) for the temperature-humidity index in the vicinity of the installation location of the sensor device 30D based on "sensor data 3-1-1" and "sensor data 3-2-1". Also, the calculation section 52 finds the calculation result Y2 (ID = 3) for the temperature-humidity index based on "sensor data 3-1-2" and "sensor data 3-2-2".

Then, the LAN communication section 25 of the node device 20A transmits the calculation results Y1 (ID = 1), Y2 (ID = 1), Y1 (ID = 3), and Y2 (ID = 3) for the temperature-humidity index to the client PC 10.

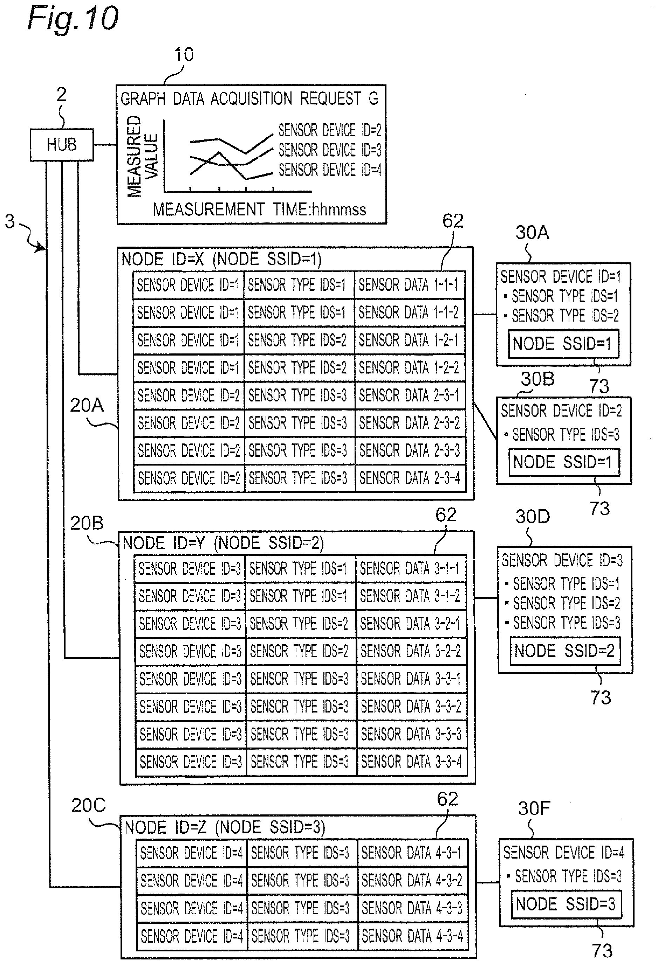

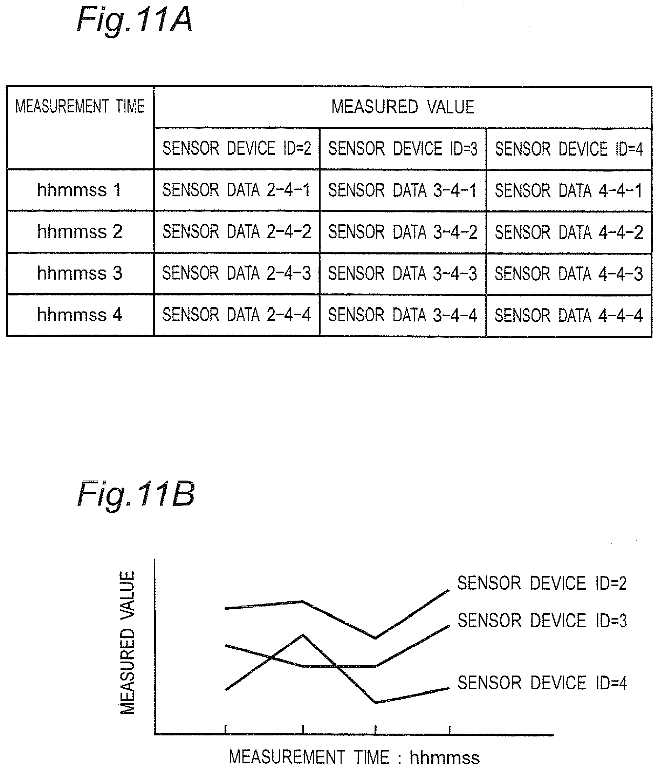

Now, a case that the client PC 10 requests and acquires data of the graph from the node devices by operating the graph creation section 53 illustrated in Fig. 12 will be described with reference to Figs. 10, 11A, and 11B (The reference symbols in Figs. 4, 6, and 12 will be used as required).

The graph creation section 53 of each of the node devices 20 creates the data of the graph to meet the information acquisition request based on the sensor data acquired by the sensor data search section 51. Then, the LAN communication section 25 (see Fig. 3) of each of the node devices 20 transmits the data of the graph created by the graph creation section 53 based on the sensor data acquired by the sensor data search section 51 to the client PC 10.

As illustrated in Fig. 10, the sensor devices 30A, 30B, 30D, and 30F, the node devices 20A, 20B, and 20C, and the client PC 10 are connected in the same manner as illustrated in Fig. 7. The sensor data storage sections 62 of the node devices 20A, 20B, and 20C save the sensor data in the same manner as illustrated in Fig. 7.

In that state, the client PC 10 makes a graph data acquisition request G as the second information acquisition request to, for example, the node device 20C (NODE ID = Z) as the second node device for a graph showing time series variations of the electric energies measured by the sensor device 30B (sensor device ID = 2), the sensor device 30D (sensor device ID = 3), and the sensor device 30F (sensor device ID = 4). Specifically, the client PC 10 specifies the sensor data (electric energy) of the sensor type "3" (IDS = 3) and makes the data of the graph acquisition request G for the graph showing the comparison of the time series variations of the electric energies acquired on the basis of the sensor data among the respective sensor devices (sensor device IDs = 2, 3, 4).

In response to the data of the graph acquisition request G, the sensor data search section 51 of the node device 20C searches for the sensor data of "IDS = 3" saved in the sensor data storage section 62 while issuing the sensor data acquisition request to the other node devices 20A and 20B.

The sensor data search section 51 of the node device 20C acquires "sensor data 4-3-1", "sensor data 4-3-2", "sensor data 4-3-3", and "sensor data 4-3-4" from the sensor data storage section 62. On the other hand, in response to the sensor data acquisition request made by the node device 20C, the node device 20A transmits "sensor data 2-3-1", "sensor data 2-3-2", "sensor data 2-3-3", and "sensor data 2-3-4" saved in the sensor data storage section 62 to the node device 20C via the LAN communication section 25. Also, in response to the sensor data acquisition request made by the node device 20C, the node device 20B transmits "sensor data 3-3-1", "sensor data 3-3-2", "sensor data 3-3-3", and "sensor data 3-3-4" saved in the sensor data storage section 62 to the node device 20C via the LAN communication section 25.

The sensor data acquired by the sensor data search section 51 are the electric energies measured by the respective sensor devices (sensor device IDs = 2, 3, 4) at the respective measurement time-of-days hhmmss1 to hhmmss4 as shown in Fig. 11A. Then, the graph creation section 53 of the node device 20C creates graphs showing the time series variations of the electric energies measured by the respective sensor devices from the sensor data as shown in Fig. 11B. In Fig. 11B, the axis of abscissas represents the measurement time-of-day hhmmss and the axis of ordinate represents the measured value of the electric energy.

Next, the LAN communication section 25 of the node device 20C transmits image data of the graph to the client PC 10 as illustrated in Fig. 10. Therefore, the client PC 10 can access the graph by neither taking trouble nor spending time in creating the graph based on the sensor data acquired by the sensor data search section or the calculation result data acquired on the basis of the sensor data.

The client PC 10 can make the calculation result acquisition request C as the first information acquisition request to the node device 20A as the first node device as described with reference to Figs. 8 and 9 in parallel with the data of the graph acquisition request G as the second information acquisition request to the node device 20C as the second node device as described with reference to Figs. 10, 11A, and 11B. As a result, the embodiment can distribute the loads among the plurality of node devices (in the above example, between the node device 20A and the node device 20C). Therefore, the embodiment can improve the performance of the whole network system.

(Third Configuration Example)

Now, a third configuration example of the network system 1 will be described.

Fig. 13 illustrates constituent elements from the viewpoint of functionality of the CPU 11 included in the client PC 10 in the third configuration example of the network system 1. The CPU 11 has a fault detection section 91 and an information acquisition request switch section 92 (The fault detection section 91 and the information acquisition request switch section 92 are implemented as software programs.). The fault detection section 91 of the client PC 10 detects a fault in the connection between the client PC 10 and the node device to which the information acquisition request was made. When the fault detection section 91 detected the fault, the information acquisition request switch section 92 of the client PC 10 stops to make the information acquisition request to any of the node devices 20A, 20B, 20C to which the information acquisition request was made and makes the information acquisition request to any of the plurality of node devices other than the node device to which the information acquisition request was made.

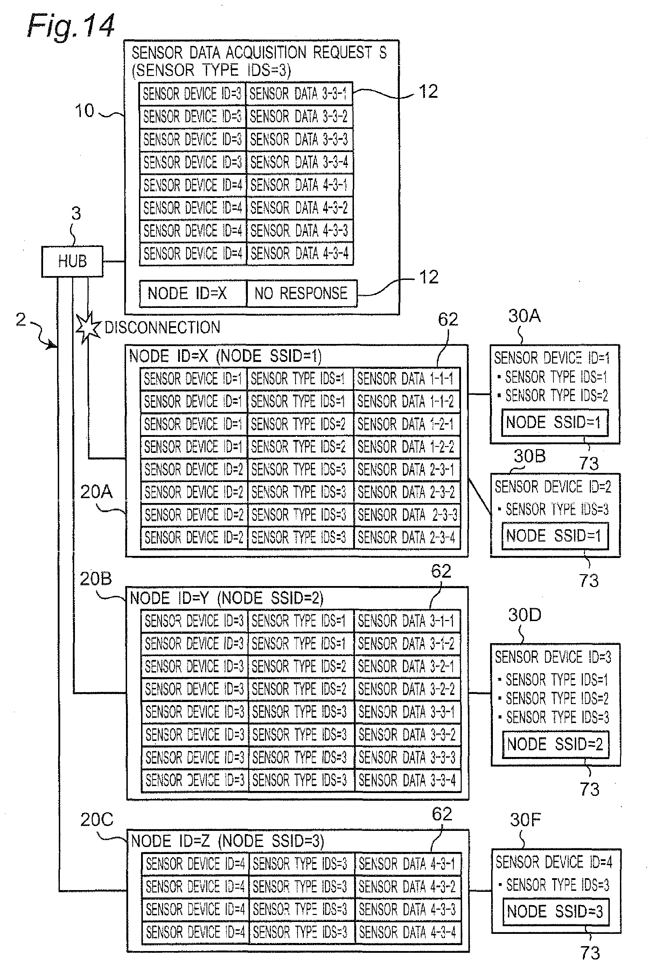

Now, processes in which the client PC 10 makes a sensor data acquisition request S to the node device 20B when a fault occurred in the connection between the client PC 10 and the node device 20A to which the sensor data acquisition request S was made will be described with reference to Fig. 14 (The reference symbols in Figs. 5, 6 and 13 will be used as required.).

As illustrated in Fig. 14, the sensor devices 30A, 30B, 30D, and 30F, the node devices 20A, 20B, and 20C, and the client PC 10 are connected in the same manner as illustrated in Fig. 7. The sensor data storage sections 62 of the node devices 20A, 20B, and 20C save the sensor data in the same manner as illustrated in Fig. 7.

In that state, the client PC 10 makes the sensor data acquisition request S to the node device 20A (NODE ID = X) for the sensor data of the sensor type "3" (IDS = 3).

It is assumed that the LAN 2 between the client PC 10 and the node device 20A has been disconnected when the client PC 10 makes the sensor data acquisition request S. Since the data sections have not arrived at the client PC 10 from the LAN communication section 25 of the node device 20A in a predetermined time period (for example, one minute) after the issuance of the sensor data acquisition request S, the fault detection section 91 of the client PC 10 determines that a fault has occurred in the connection between the client PC 10 and the node device 20A. As a result, the fault detection section 91 can more certainly detect the fault.

When the fault detection section 91 detected the fault, the information acquisition request switch section 92 of the client PC 10 stops to make the sensor data request S to the node device 20A, switches to the node device 20B from the node device 20A, and makes the sensor data acquisition request S to the node device 20B.

The sensor data search section 51 of the node device 20B searches for the sensor data of "IDS = 3" saved in the sensor data storage section 62 while issuing the sensor data acquisition request S to the node device 20C. Due to the fault, the node device 20A cannot receive the sensor data acquisition request S made by the node device 20B.

The sensor data search section 51 of the node device 20B acquires "sensor data 3-3-1", "sensor data 3-3-2", "sensor data 3-3-3", and "sensor data 3-3-4" from the sensor data storage section 62. On the other hand, in response to the sensor data acquisition request S made by the node device 20B, the node device 20C transmits "sensor data 4-3-1", "sensor data 4-3-2", "sensor data 4-3-3", and "sensor data 4-3-4" saved in the sensor data storage section 62 to the node device 20B via the LAN communication section 25.

Then, the LAN communication section 25 of the node device 20B transmits "sensor data 3-3-1", "sensor data 3-3-2", "sensor data 3-3-3", and "sensor data 3-3-4" and "sensor data 4-3-1", "sensor data 4-3-2", "sensor data 4-3-3", and "sensor data 4-3-4", and "NODE ID = X, NO RESPONSE" indicating that no response has been received from the node device 20A to the client PC 10.

In that manner, in the third configuration example, even if the fault is detected, the information acquisition request switch section 92 switches the node device 20A to the node device 20B other than the node device 20A and automatically makes the sensor data acquisition request S to the node device 20B. As a result, fault-tolerance can be realized.

Although the network system 1 includes one client PC 10 as a computer apparatus in the above described embodiments, the network system 1 is not limited to that. The network system 1 may include a plurality of client devices or various types of computers which can communicate via a network such as a server device and a host computer.

Although it is assumed that one client PC 10 as a computer apparatus and the node devices 20A, 20B, 20C, ... are connected by the LAN 2 as a network in the above described embodiments, the network is not limited to that. The network connecting the computer apparatus and the node device may be a computer network such as a wide area network (WAN) or the Internet and it may be wired or wireless.

Although each of the node devices 20A, 20B, and 20C has SSID for identifying the wireless LAN in the above described embodiments, the identifier is not limited to that. Any identifier may be used as far as it can identify the wireless LAN from LANs of the other networks.

Although each of the plurality of node devices 20A, 20B, 20C, ... is accessible by one or more sensor devices 30A, 30B, 30C, 30D, 30E, 30F, 30G, ... via Wi-Fi (registered trademark) as the wireless LAN in the above described embodiments, the present invention is not limited to that. The sensor devices only need to be communicatively connected to the node devices whether the connection is wired or wireless.

Although the graph creation section 53 of the node device creates the graph from the sensor data measured by the sensor devices 30B, 30D, and 30F in the above described embodiments, the present invention is not limited to that. The graph creation section 53 may create the graph from other sensor data or the calculation result calculated on the basis of the sensor data.

DESCRIPTION OF REFERENCE SIGNS

| | |
|---|---|
| 1: | Network system |
| 2: | LAN |
| 10: | Client PC |
| 14: | LCD indication section |
| 16: | Input device |
| 20, 20A, 20B, 20C: | Node device |
| 30, 30A, 30B, 30C, 30D, 30E, 30F, 30G: | Sensor device |
| S: | Sensor data acquisition request |
| C: | Calculation result acquisition request |
| G: | Graph data acquisition request |

**Claims**

1. A node device group comprising a plurality of node devices (20, 20A, 20B, 20C), the node device group being adapted to be placed in a network system (1),
wherein at least one computer apparatus (10) and the plurality of node devices (20, 20A, 20B, 20C) are communicatively connectable to each other via a network, each of the plurality of node devices (20, 20A, 20B, 20C) is accessible by one or more sensor devices (30, 30A-30G) via a wireless communication or wired communication,
wherein each node device of the plurality of node devices (20, 20A, 20B, 20C) is adapted to acquire sensor data from the one or more sensor devices connected to the respective node device and to save the sensor data in a sensor data storage section (62) included in the respective node device,
wherein a first node device is adapted to receive from the computer apparatus (10) an information acquisition request (S) for all of the sensor data from any one or more of the one or more sensor devices (30, 30A-30G), said first node device being any of the plurality of node devices (20, 20A, 20B, 20C), wherein
each of the plurality of node devices (20, 20A, 20B, 20C) comprises:
a sensor data search section (51) for searching the sensor data storage sections (62) of the plurality of node devices (20, 20A, 20B, 20C) for the sensor data according to the information acquisition request (S) and acquiring the sensor data, wherein the searching comprises:

   - when the respective node device is the first node device, searching, in response to the information acquisition request (S), the sensor data storage section (62) of the first node device for the sensor data according to the information acquisition request (S) and acquiring the corresponding sensor data, while issuing the information acquisition request (S) to the other node devices of the plurality of node devices (20, 20A, 20B, 20C), and
   - when the respective node device is one of the other node devices, searching, in response to the information acquisition request (S) made by the first node device, the sensor data storage section (62) of the respective node device for the sensor data according to the information acquisition request (S) and acquiring the corresponding sensor data; and
an information transmission section (25) for transmitting the sensor data acquired by the sensor data search section (51), wherein the transmitting comprises:

   - when the respective node device is one of the other node devices, transmitting, to the first node device, a reply comprising either the acquired sensor data or a non-availability indication when the sensor data storage section (62) of the respective node device does not comprise sensor data according to the information acquisition request (S), and
   - when the respective node device is the first node device, transmitting, to the computer apparatus (10) after receiving the replies from the other node devices, the sensor data acquired by the first node, and the sensor data and non-availability indications comprised in the replies of the other nodes devices.

2. A network system (1) comprising a node device group according to claim 1 and a computer apparatus (10) according to claim 1.

3. The network system (1) according to claim 2, wherein
the computer apparatus (10) is adapted to make a first information acquisition request (S) to the first node device (20A) among the plurality of node devices (20, 20A, 20B, 20C) and to concurrently make a second information acquisition request (S) different from the first information acquisition request (S) to a second node device (20B, 20C) different from the first node device (20A).

4. The network system (1) according to any one of claims 2 to 3, wherein the network system (1) further comprises:

a node load detection section (91) for detecting a load on each of the node devices (20, 20A, 20B, 20C) every certain period of time, and
a load leveling section for switching the node device that received the information acquisition request (S) to a proper node device for responding to the information acquisition request (S) to level out the loads among the plurality of node devices(20, 20A, 20B, 20C).

5. The network system (1) according to claim 4, wherein
the load leveling section includes a decision section provided for each of the plurality of node devices (20, 20A, 20B, 20C), and
the decision section provided for a third node device and the decision section (55) provided for a fourth node device among the plurality of node devices (20, 20A, 20B, 20C) are adapted to make a decision about switching the node device to respond to the information acquisition request (S) between the third node device and the fourth node device to level out the loads between the third node device and the fourth node device.

6. The network system (1) according to any one of claims 2 to 5, wherein
the computer apparatus (10) comprises:

a fault detection section (91) for detecting a fault in a connection between the computer apparatus (10) and the node device (20A) to which the information acquisition request (S) was made; and
an information acquisition request switch section (92) for stopping to make the information acquisition request (S) to the node device to which the information acquisition request (S) was made and making the information acquisition request (S) to any of the plurality of node devices (20B, 20C) other than the node device to which the information acquisition request (S) was made, when the fault detection section (91) detected the fault.

7. The network system (1) according to claim 6, wherein
the fault detection section (91) is adapted to determine that the fault occurred when data was not transmitted from the information transmission section (25) within a predetermined time period after the information acquisition request (S) was made.

8. A method for transmitting and receiving sensor data in a network system (1), wherein at least one computer apparatus (10) and a plurality of node devices (20, 20A, 20B, 20C) are communicatively connected to each other via a network, each of the plurality of node devices (20, 20A, 20B, 20C) is accessible by one or more sensor devices (30, 30A-30G) via a wireless communication or wired communication, the method comprising:

acquiring, by each node device of the plurality of node devices (20, 20A, 20B, 20C), sensor data from the one or more sensor devices (30, 30A-30G) connected to the respective node device and saving the sensor data in a sensor data storage section (62) included in the respective node device
receiving, from the computer apparatus (10) and by a first node device which is any of the plurality of node devices (20, 20A, 20B, 20C), an information acquisition request (S) for all of the sensor data from any one or more of the one or more sensor devices (30, 30A-30G),
searching, by a sensor data search section (51) of the first node device, the sensor data storage sections (62) of the plurality of node devices (20, 20A, 20B, 20C) for the sensor data according to the information acquisition request (S) and acquiring the sensor data, wherein the searching comprises:

- searching, by the first node device in response to the information acquisition request (S), the sensor data storage section (62) of the first node device for the sensor data according to the information acquisition request (S) and acquiring the corresponding sensor data, while issuing the information acquisition request (S) to the other node devices of the plurality of node devices (20, 20A, 20B, 20C), and
- searching, by each one of the other node devices and in response to the information acquisition request (S) made by the first node device, the sensor data storage section (62) of the respective node device for the sensor data according to the information acquisition request (S) and acquiring the corresponding sensor data; and

transmitting, to the first node device by an information transmission section (25) of each one of the other node devices, a reply comprising either the acquired sensor data or a non-availability indication when the sensor data storage section (62) of the respective node device does not comprise sensor data according to the information acquisition request (S); and

transmitting, to the computer apparatus (10) by an information transmission section (25) of the first node device, after receiving the replies from the other node devices, the sensor data acquired by the first node, and the sensor data and non-availability indications comprised in the replies of the other nodes devices.

**Patentansprüche**

1. Gruppe aus Knotenvorrichtungen, die mehrere Knotenvorrichtungen (20, 20A, 20B, 20C) umfasst, wobei die Gruppe aus Knotenvorrichtungen eingerichtet ist, um in einem Netzwerksystem (1) platziert zu werden, wobei mindestens eine Computervorrichtung (10) und die mehreren Knotenvorrichtungen (20, 20A, 20B, 20C) kommunikativ miteinander über ein Netzwerk verbunden werden können, wobei auf jede der mehreren Knotenvorrichtungen (20, 20A, 20B, 20C) durch eine oder mehrere Sensorvorrichtungen (30, 30A-30G) über eine drahtlose Verbindung oder eine drahtgebundene Verbindung zugegriffen werden kann,

wobei jede Knotenvorrichtung der mehreren Knotenvorrichtungen (20, 20A, 20B, 20C) eingerichtet ist, um Sensordaten von der einen oder den mehreren Sensorvorrichtungen zu empfangen, die mit der jeweiligen Knotenvorrichtung verbunden sind, und um die Sensordaten in einem Sensordatenspeicherbereich (62) zu speichern, der in der jeweiligen Knotenvorrichtung enthalten ist,

wobei eine erste Knotenvorrichtung eingerichtet ist, um von der Computervorrichtung (10) eine Informationserfassungsanfrage (S) in Bezug auf alle Sensordaten von einer oder mehreren der einen oder mehreren Sensorvorrichtungen (30, 30A-30G) zu erhalten, wobei die erste Knotenvorrichtung eine der mehreren Knotenvorrichtungen (20, 20A, 20B, 20C) ist, wobei

jede der mehreren Knotenvorrichtungen (20, 20A, 20B, 20C) Folgendes umfasst:

einen Sensordatensuchbereich (51) zum Durchsuchen der Sensordatenspeicherbereiche (62) der mehreren Knotenvorrichtungen (20, 20A, 20B, 20C) nach den Sensordaten gemäß der Informationserfassungsanfrage (S) und Erfassen der Sensordaten, wobei das Durchsuchen Folgendes umfasst:

- wenn die jeweilige Knotenvorrichtung die erste Knotenvorrichtung ist, Durchsuchen als Reaktion auf die Informationserfassungsanfrage (S) des Sensordatenspeicherbereichs (62) der ersten Knotenvorrichtung nach den Sensordaten gemäß der Informationserfassungsanfrage (S) und Erfassen der entsprechenden Sensordaten, während die Informationserfassungsanfrage (S) an die anderen Knotenvorrichtungen der mehreren Knotenvorrichtungen (20, 20A, 20B, 20C) ausgegeben wird, und
- wenn die jeweilige Knotenvorrichtung eine der anderen Knotenvorrichtungen ist, Durchsuchen als Reaktion auf die Informationserfassungsanfrage (S), die von der ersten Knotenvorrichtung durchgeführt wird, des Sensordatenspeicherbereichs (62) der jeweiligen Knotenvorrichtung nach den Sensordaten gemäß der Informationserfassungsanfrage (S) und Erfassen der entsprechenden Sensordaten; und

einen Informationssendebereich (25) zum Senden der Sensordaten, die von dem Sensordatensuchbereich (51) erfasst werden, wobei das Senden Folgendes umfasst:

- wenn die jeweilige Knotenvorrichtung eine der anderen Knotenvorrichtungen ist, Senden zu der ersten Knotenvorrichtung einer Antwort, die entweder die erfassten Sensordaten oder eine Nichtverfügbarkeitsangabe, wenn der Sensordatenspeicherbereich (62) der jeweiligen Knotenvorrichtung keine Sensordaten umfasst, gemäß der Informationserfassungsanfrage (S), und
- wenn die jeweilige Knotenvorrichtung die erste Knotenvorrichtung ist, Senden zu der Computervorrichtung (10), nach dem Erhalten der Antworten von den anderen Knotenvorrichtungen, der Sensordaten, die von dem ersten Knoten erfasst werden, und der Sensordaten und der Nichtverfügbarkeitsangaben, die in den Antworten der anderen Knotenvorrichtungen enthalten sind.

2. Netzwerksystem (1), das eine Gruppe aus Knotenvorrichtungen nach Anspruch 1 und eine Computervorrichtung (10) nach Anspruch 1 umfasst.

3. Netzwerksystem (1) nach Anspruch 2, wobei die Computervorrichtung (10) eingerichtet ist, um eine erste Informationserfassungsanfrage (S) an die erste Knotenvorrichtung (20A) unter den mehreren Knotenvorrichtungen (20, 20A, 20B, 20C) durchzuführen und gleichzeitig eine zweite Informationserfassungsanfrage (S), die sich von der ersten Informationserfassungsanfrage (S) unterscheidet, an eine zweite Knotenvorrichtung (20B, 20C), die sich von der ersten Knotenvorrichtung (20A) unterscheidet, durchzuführen.

4. Netzwerksystem (1) nach einem der Ansprüche 2 bis 3, wobei das Netzwerksystem (1) ferner Folgendes umfasst:

einen Knotenlasterkennungsbereich (91) zum Erkennen einer Last auf jeder der Knotenvorrichtungen (20, 20A, 20B, 20C) in jedem bestimmten Zeitraum, und einen Lastausgleichsbereich zum Wechseln der Knotenvorrichtung, die die Informationserfassungsanfrage (S) erhalten hat, zu einer geeigneten Knotenvorrichtung zum Antworten auf die Informationserfassungsanfrage (S), um die Lasten unter den mehreren Knotenvorrichtungen (20, 20A, 20B, 20C) auszugleichen.

5. Netzwerksystem (1) nach Anspruch 4, wobei der Lastausgleichsbereich einen Entscheidungsbereich beinhaltet, der für jede der mehreren Knotenvorrichtungen (20, 20A, 20B, 20C) vorgesehen ist, und der Entscheidungsbereich, der für eine dritte Knotenvorrichtung vorgesehen ist, und der Entscheidungsbereich (55), der für eine vierte Knotenvorrichtung unter den mehreren Knotenvorrichtungen (20, 20A, 20B, 20C) vorgesehen ist, eingerichtet sind, um eine Entscheidung hinsichtlich des Wechselns der Knotenvorrichtung zum Antworten auf die Informationserfassungsanfrage (S) zwischen der dritten Knotenvorrichtung und der vierten Knotenvorrichtung zum Ausgleichen der Lasten zwischen der dritten Knotenvorrichtung und der vierten Knotenvorrichtung zu treffen.

6. Netzwerksystem (1) nach einem der Ansprüche 2 bis 5, wobei die Computervorrichtung (10) Folgendes umfasst:

einen Fehlererkennungsbereich (91) zum Erkennen eines Fehlers in einer Verbindung zwischen der Computervorrichtung (10) und der Knotenvorrichtung (20A), an welche die Informationserfassungsanfrage (S) durchgeführt wurde; und einen Informationserfassungsanfragewechselbereich (92) zum Stoppen des Durchführens der Informationserfassungsanfrage (S) an die Knotenvorrichtung, an welche die Informationserfassungsanfrage (S) durchgeführt wurde, und Durchführen der Informationserfassungsanfrage (S) an jede der mehreren Knotenvorrichtungen (20B, 20C), die sich von der Knotenvorrichtung unterscheiden, an welche die Informationserfassungsanfrage (S) durchgeführt wurde, wenn der Fehlererkennungsbereich (91) den Fehler erkannt hat.

7. Netzwerksystem (1) nach Anspruch 6, wobei der Fehlererkennungsbereich (91) eingerichtet ist, um zu bestimmen, dass der Fehler aufgetreten ist, wenn Daten nicht von dem Informationssendebereich (25) innerhalb eines vorbestimmten Zeitraums, nach dem die Informationserfassungsanfrage (S) durchgeführt wurde, gesendet wurden.

8. Verfahren zum Senden und Empfangen von Sensordaten in einem Netzwerksystem (1), wobei mindestens eine Computervorrichtung (10) und mehrere Knotenvorrichtungen (20, 20A, 20B, 20C) kommunikativ miteinander über ein Netzwerk verbunden sind, wobei auf jede der mehreren Knotenvorrichtungen (20, 20A, 20B, 20C) durch eine oder mehrere Sensorvorrichtungen (30, 30A-30G) über eine drahtlose Verbindung oder eine drahtgebundene Verbindung zugegriffen werden kann, wobei das Verfahren Folgendes umfasst:

Erfassen durch jede Knotenvorrichtung der mehreren Knotenvorrichtungen (20, 20A, 20B, 20C) von Sensordaten von der einen oder den mehreren Sensorvorrichtungen (30, 30A-30G), die mit der jeweiligen Knotenvorrichtung verbunden sind, und Speichern der Sensordaten in einem Sensordatenspeicherbereich (62), der in der jeweiligen Knotenvorrichtung enthalten ist, Erhalten von der Computervorrichtung (10) und durch eine erste Knotenvorrichtung, welche eine der mehreren Knotenvorrichtungen (20, 20A, 20B, 20C) ist, einer Informationserfassungsanfrage (S) in Bezug auf alle der Sensordaten von einer oder mehreren der einen oder mehreren Sensorvorrichtungen (30, 30A-30G), Durchsuchen durch einen Sensordatensuchbereich (51) der ersten Knotenvorrichtung der Sensordatenspeicherbereiche (62) der mehreren Knotenvorrichtungen (20, 20A, 20B, 20C) nach den Sensordaten gemäß der Informationserfassungsanfrage (S) und Erfassen der Sensordaten, wobei das Durchsuchen Folgendes umfasst:

- Durchsuchen durch die erste Knotenvorrichtung als Reaktion auf die Informationserfassungsanfrage (S) des Sensordatenspeicherbereichs (62) der ersten Knotenvorrichtung nach den Sensordaten gemäß der Informationserfassungsanfrage (S) und Erfassen der entsprechenden Sensordaten, während die Informationserfassungsanfrage (S) an die anderen Knotenvorrichtungen der mehreren Knotenvorrichtungen (20, 20A, 20B, 20C) ausgegeben wird, und

- Durchsuchen durch jede der anderen Knotenvorrichtungen und als Reaktion auf die Informationserfassungsanfrage (S), die von der ersten Knotenvorrichtung durchgeführt wird, des Sensordatenspeicherbereichs (62) der jeweiligen Knotenvorrichtung nach den Sensordaten gemäß der Informationserfassungsanfrage (S) und Erfassen der entsprechenden Sensordaten; und

Senden zu der ersten Knotenvorrichtung durch einen Informationssendebereich (25) von jeder der anderen Knotenvorrichtungen einer Antwort, die entweder die erfassten Sensordaten oder eine Nichtverfügbarkeitsangabe, wenn der Sensordatenspeicherbereich (62) der jeweiligen Knotenvorrichtung keine Sensordaten umfasst, gemäß der Informationserfassungsanfrage (S) ; und

Senden zu der Computervorrichtung (10) durch einen Informationssendebereich (25) der ersten Knotenvorrichtung, nach dem Empfangen der Antworten von den anderen Knotenvorrichtungen, der Sensordaten, die von dem ersten Knoten erfasst werden, und der Sensordaten und Nichtverfügbarkeitsangaben, die in den Antworten der anderen Knotenvorrichtungen enthalten sind.

## Revendications

1. Groupe de dispositifs de noeud comprenant une pluralité de dispositifs de noeud (20, 20A, 20B, 20C), le groupe de dispositifs de noeud étant adapté pour être placé dans un système de réseau (1),

   dans lequel au moins un dispositif informatique (10) et la pluralité de dispositifs de noeud (20, 20A, 20B, 20C) peuvent être connectés avec capacité de communication les uns aux autres via un réseau, chacun de la pluralité de dispositifs de noeud (20, 20A, 20B, 20C) est accessible par un ou plusieurs dispositifs de capteur (30, 30A à 30G) via une communication sans fil ou une communication filaire,

   dans lequel chaque dispositif de noeud de la pluralité de dispositifs de noeud (20, 20A, 20B, 20C) est adapté pour acquérir des données de capteur provenant des un ou plusieurs dispositifs de capteur connectés au dispositif de noeud respectif et pour sauvegarder les données de capteur dans une section de stockage de données de capteur (62) incluse dans le dispositif de noeud respectif,

   dans lequel un premier dispositif de noeud est adapté pour recevoir en provenance du dispositif informatique (10) une demande d'acquisition d'informations (S) pour toutes les données de capteur en provenance de l'un quelconque ou de plusieurs des un ou plusieurs dispositifs de capteur (30, 30A à 30G), ledit premier dispositif de noeud étant l'un quelconque de la pluralité de dispositifs de noeud (20, 20A, 20B, 20C), dans lequel

   chacun de la pluralité de dispositifs de noeud (20, 20A, 20B, 20C) comprend :

   une section de recherche de données de capteur (51) pour rechercher dans les sections de stockage de données de capteur (62) de la pluralité de dispositifs de noeud (20, 20A, 20B, 20C) les données de capteur selon la demande d'acquisition d'informations (S) et acquérir les données de capteur, dans lequel la recherche comprend :

   - lorsque le dispositif de noeud respectif est dans le premier dispositif de noeud, la recherche, en réponse à la demande d'acquisition d'informations (S), dans la section de stockage de données de capteur (62) du premier dispositif de noeud des données de capteur selon la demande d'acquisition d'informations (S) et l'acquisition des données de capteur correspondantes, tout en émettant la demande d'acquisition d'informations (S) aux autres dispositifs de noeud de la pluralité de dispositifs de noeud (20, 20A, 20B, 20C), et
   - lorsque le dispositif de noeud respectif est l'un des autres dispositifs de noeud, la recherche, en réponse à la demande d'acquisition d'informations (S) présentée par le premier dispositif de noeud, dans la section de stockage de données de capteur (62) du dispositif de noeud respectif, des données de capteur selon la demande d'acquisition d'informations (S) et l'acquisition des données de capteur correspondantes ; et

   une section de transmission d'informations (25) pour transmettre les données de capteur acquises par la section de recherche de données de capteur (51), dans lequel la transmission comprend :

   - lorsque le dispositif de noeud respectif est l'un des autres dispositifs de noeud, la transmission, au premier dispositif de noeud, d'une réponse comprenant soit les données de capteur acquises soit une indication d'indisponibilité lorsque la section de stockage de données de capteur (62) du dispositif de noeud respectif ne comprend pas des données de capteur selon la demande d'acquisition d'informations (S), et

- lorsque le dispositif de noeud respectif est le premier dispositif de noeud, la transmission, à au dispositif informatique (10) après la réception des réponses en provenance des autres dispositifs de noeud, des données de capteur acquises par le premier noeud, et des données de capteur et des indications d'indisponibilité comprises dans les réponses des autres dispositifs de noeud.

2. Système de réseau (1) comprenant un groupe de dispositifs de noeud selon la revendication 1 et un dispositif informatique (10) selon la revendication 1.

3. Système de réseau (1) selon la revendication 2, dans lequel
le dispositif informatique (10) est adapté pour présenter une première demande d'acquisition d'informations (S) au premier dispositif de noeud (20A) parmi la pluralité de dispositifs de noeud (20, 20A, 20B, 20C) et pour présenter simultanément une seconde demande d'acquisition d'informations (S) différente de la première demande d'acquisition d'informations (S) à un deuxième dispositif de noeud (20B, 20C) différent du premier dispositif de noeud (20A).

4. Système de réseau (1) selon l'une quelconque des revendications 2 et 3, dans lequel
le système de réseau (1) comprend en outre :

une section de détection de charge de noeud (91) pour détecter une charge sur chacun des dispositifs de noeud (20, 20A, 20B, 20C) périodiquement, et
une section de nivellement de charge pour permuter le dispositif de noeud qui a reçu la demande d'acquisition d'informations (S) à un dispositif de noeud correct pour répondre à la demande d'acquisition d'informations (S) afin de niveler les charges parmi la pluralité de dispositifs de noeud (20, 20A, 20B, 20C).

5. Système de réseau (1) selon la revendication 4, dans lequel
la section de nivellement de charge inclut une section de décision prévue pour chacun de la pluralité de dispositifs de noeud (20, 20A, 20B, 20C), et
la section de décision prévue pour un troisième dispositif de noeud et la section de décision (55) prévue pour un quatrième dispositif de noeud parmi la pluralité de dispositifs de noeud (20, 20A, 20B, 20C) sont adaptées pour prendre une décision concernant la permutation du dispositif de noeud pour répondre à la demande d'acquisition d'informations (S) entre le troisième dispositif de noeud et le quatrième dispositif de noeud afin de niveler les charges entre le troisième dispositif de noeud et le quatrième dispositif de noeud.

6. Système de réseau (1) selon l'une quelconque des revendications 2 à 5, dans lequel
le dispositif informatique (10) comprend :

une section de détection de défaillance (91) pour détecter une défaillance dans une connexion entre le dispositif informatique (10) et le dispositif de noeud (20A) auquel la demande d'acquisition d'informations (S) a été présentée ; et
une section de permutation de demande d'acquisition d'informations (92) pour arrêter de présenter la demande d'acquisition d'informations (S) au dispositif de noeud auquel la demande d'acquisition d'informations (S) a été présentée et pour présenter la demande d'acquisition d'informations (S) à l'un quelconque de la pluralité de dispositifs de noeud (20B, 20C) autres que le dispositif de noeud auquel la demande d'acquisition d'informations (S) a été présentée, lorsque la section de détection de défaillance (91) a détecté la défaillance.

7. Système de réseau (1) selon la revendication 6, dans lequel
la section de détection de défaillance (91) est adaptée pour déterminer que la défaillance a eu lieu lorsque des données n'ont pas été transmises depuis la section de transmission d'informations (25) dans une période de temps prédéterminée après que la demande d'acquisition d'informations (S) a été présentée.

8. Procédé de transmission et de réception de données de capteur dans un système de réseau (1), dans lequel au moins un dispositif informatique (10) et une pluralité de dispositifs de noeud (20, 20A, 20B, 20C) sont connectés avec capacité de communication les uns aux autres via un réseau, chacun de la pluralité de dispositifs de noeud (20, 20A, 20B, 20C) est accessible par un ou plusieurs dispositifs de capteur (30, 30A à 30G) via une communication sans fil ou une communication filaire, le procédé comprenant :

l'acquisition, par chaque dispositif de noeud de la pluralité de dispositifs de noeud (20, 20A, 20B, 20C), de données de capteur provenant des un ou plusieurs dispositifs de capteur (30, 30A à 30G) connectés au dispositif de noeud respectif et la sauvegarde des données de capteur dans une section de stockage de données de capteur (62) incluse dans le dispositif de noeud respectif,

la réception, en provenance du dispositif informatique (10) et par un premier dispositif de noeud qui est l'un quelconque de la pluralité de dispositifs de noeud (20, 20A, 20B, 20C), d'une demande d'acquisition d'informations (S) pour toutes les données de capteur en provenance de l'un quelconque ou de plusieurs des un ou plusieurs dispositifs de capteur (30, 30A à 30G),

la recherche, par une section de recherche de données de capteur (51) du premier dispositif de noeud, dans les sections de stockage de données de capteur (62) de la pluralité de dispositifs de noeud (20, 20A, 20B, 20C), des données de capteur selon la demande d'acquisition d'informations (S) et l'acquisition des données de capteur, dans lequel la recherche comprend :

- la recherche, par le premier dispositif de noeud en réponse à la demande d'acquisition d'informations (S), dans la section de stockage de données de capteur (62) du premier dispositif de noeud, des données de capteur selon la demande d'acquisition d'informations (S) et l'acquisition des données de capteur correspondantes, tout en émettant la demande d'acquisition d'informations (S) aux autres dispositifs de noeud de la pluralité de dispositifs de noeud (20, 20A, 20B, 20C), et

- la recherche, par chacun des autres dispositifs de noeud et en réponse à la demande d'acquisition d'informations (S) présentée par le premier dispositif de noeud, dans la section de stockage de données de capteur (62) du dispositif de noeud respectif, des données de capteur selon la demande d'acquisition d'informations (S) et l'acquisition des données de capteur correspondantes ; et

la transmission, au premier dispositif de noeud par une section de transmission d'informations (25) de chacun des autres dispositifs de noeud, d'une réponse comprenant soit les données de capteur acquises soit une indication d'indisponibilité lorsque la section de stockage de données de capteur (62) du dispositif de noeud respectif ne comprend pas des données de capteur selon la demande d'acquisition d'informations (S) ; et

la transmission, au dispositif informatique (10) par une section de transmission d'informations (25) du premier dispositif de noeud, après la réception des réponses en provenance des autres dispositifs de noeud, les données de capteur acquises par le premier noeud, et des données de capteur et des indications d'indisponibilité comprises dans les réponses des autres dispositifs de noeud.

## Fig.1

NETWORK SYSTEM 1

CLIENT PC
10

2

NODE DEVICE — 20A

NODE DEVICE — 20B

NODE DEVICE — 20C

| SENSOR DEVICE | SENSOR DEVICE | SENSOR DEVICE | SENSOR DEVICE | SENSOR DEVICE | SENSOR DEVICE | SENSOR DEVICE |
|---|---|---|---|---|---|---|
| 30A | 30B | 30C | 30D | 30E | 30F | 30G |

EP 2 775 665 B1

## Fig.2

CLIENT PC
10

| | |
|---|---|
| 11 CPU | 19 → EXTERNAL STORAGE — 17 |
| 12 MEMORY | INPUT DEVICE — 16 |
| 13 POWER SUPPLY SECTION | LAN COMMUNICATION SECTION — 15 |
| | LCD INDICATION SECTION — 14 |

## Fig.3

NODE DEVICE
20

| | |
|---|---|
| 21 CPU | 29 → WIRELESS COMMUNICATION SECTION — 26 |
| 22 MEMORY | LAN COMMUNICATION SECTION — 25 |
| 23 POWER SUPPLY SECTION | LED INDICATION SECTION — 24 |

*Fig.4*

SENSOR DEVICE
30

39

31 CPU

32 MEMORY

33 POWER SUPPLY SECTION

39

WIRELESS COMMUNICATION SECTION 36

SENSOR CONNECTION SECTION 35

LED INDICATION SECTION 34

TEMPERATURE SENSOR 41

ILLUMINANCE SENSOR 42

FLOW VELOCITY SENSOR 43

ACCELERATION SENSOR 44

PRESSURE SENSOR 45

HUMIDITY SENSOR 46

POWER SENSOR 47

# Fig.5

NODE DEVICE 20

CPU 21

| SENSOR DATA SEARCH SECTION | 51 |

MEMORY 22

| SELF ID STORAGE SECTION | 61 |
| SENSOR DATA STORAGE SECTION | 62 |

# Fig.6

SENSOR DEVICE 30

MEMORY 32

| SELF ID STORAGE SECTION | 71 |
| SENSOR DATA STORAGE SECTION | 72 |
| CONNECTION TARGET NODE ID STORAGE SECTION | 73 |

# Fig.7

**10** — SENSOR DATA ACQUISITION REQUEST S (SENSOR TYPE IDS=1)

**3** — HUB

**2**

| | |
|---|---|
| SENSOR DEVICE ID=1 | SENSOR DATA 1-1-1 |
| SENSOR DEVICE ID=1 | SENSOR DATA 1-1-2 |
| SENSOR DEVICE ID=3 | SENSOR DATA 3-1-1 |
| SENSOR DEVICE ID=3 | SENSOR DATA 3-1-2 |

— 12

| | |
|---|---|
| NODE ID=1 | NOT AVAILABLE |

— 12

**62**

**NODE ID=X (NODE SSID=1)**

| | | |
|---|---|---|
| SENSOR DEVICE ID=1 | SENSOR TYPE IDS=1 | SENSOR DATA 1-1-1 |
| SENSOR DEVICE ID=1 | SENSOR TYPE IDS=1 | SENSOR DATA 1-1-2 |
| SENSOR DEVICE ID=1 | SENSOR TYPE IDS=2 | SENSOR DATA 1-2-1 |
| SENSOR DEVICE ID=1 | SENSOR TYPE IDS=2 | SENSOR DATA 1-2-2 |
| SENSOR DEVICE ID=2 | SENSOR TYPE IDS=3 | SENSOR DATA 2-3-1 |
| SENSOR DEVICE ID=2 | SENSOR TYPE IDS=3 | SENSOR DATA 2-3-2 |
| SENSOR DEVICE ID=2 | SENSOR TYPE IDS=3 | SENSOR DATA 2-3-3 |
| SENSOR DEVICE ID=2 | SENSOR TYPE IDS=3 | SENSOR DATA 2-3-4 |

**20A**

**30A**

SENSOR DEVICE ID=1
· SENSOR TYPE IDS=1
· SENSOR TYPE IDS=2

NODE SSID=1

**30B** **73**

SENSOR DEVICE ID=2
· SENSOR TYPE IDS=3

NODE SSID=1

**73**

**20B**

**62**

**NODE ID=Y (NODE SSID=2)**

| | | |
|---|---|---|
| SENSOR DEVICE ID=3 | SENSOR TYPE IDS=1 | SENSOR DATA 3-1-1 |
| SENSOR DEVICE ID=3 | SENSOR TYPE IDS=1 | SENSOR DATA 3-1-2 |
| SENSOR DEVICE ID=3 | SENSOR TYPE IDS=2 | SENSOR DATA 3-2-1 |
| SENSOR DEVICE ID=3 | SENSOR TYPE IDS=2 | SENSOR DATA 3-2-2 |
| SENSOR DEVICE ID=3 | SENSOR TYPE IDS=3 | SENSOR DATA 3-3-1 |
| SENSOR DEVICE ID=3 | SENSOR TYPE IDS=3 | SENSOR DATA 3-3-2 |
| SENSOR DEVICE ID=3 | SENSOR TYPE IDS=3 | SENSOR DATA 3-3-3 |
| SENSOR DEVICE ID=3 | SENSOR TYPE IDS=3 | SENSOR DATA 3-3-4 |

**30D**

SENSOR DEVICE ID=3
· SENSOR TYPE IDS=1
· SENSOR TYPE IDS=2
· SENSOR TYPE IDS=3

NODE SSID=2

**73**

**20C**

**62**

**NODE ID=Z (NODE SSID=3)**

| | | |
|---|---|---|
| SENSOR DEVICE ID=4 | SENSOR TYPE IDS=3 | SENSOR DATA 4-3-1 |
| SENSOR DEVICE ID=4 | SENSOR TYPE IDS=3 | SENSOR DATA 4-3-2 |
| SENSOR DEVICE ID=4 | SENSOR TYPE IDS=3 | SENSOR DATA 4-3-3 |
| SENSOR DEVICE ID=4 | SENSOR TYPE IDS=3 | SENSOR DATA 4-3-4 |

**30F**

SENSOR DEVICE ID=4
· SENSOR TYPE IDS=3

NODE SSID=3

**73**

*Fig.8*

**CALCULATION RESULT ACQUISITION REQUEST C (TEMPERATURE-HUMIDITY INDEX)** — 10

| | |
|---|---|
| IN THE VICINITY OF THE INSTALLATION LOCATIONS OF THE SENSOR DEVICE ID=1 | Y1 (ID=1) |
| IN THE VICINITY OF THE INSTALLATION LOCATIONS OF THE SENSOR DEVICE ID=1 | Y2 (ID=1) |
| IN THE VICINITY OF THE INSTALLATION LOCATIONS OF THE SENSOR DEVICE ID=3 | Y1 (ID=3) |
| IN THE VICINITY OF THE INSTALLATION LOCATIONS OF THE SENSOR DEVICE ID=3 | Y2 (ID=3) |

12

3

**HUB**

2

**NODE ID=X (NODE SSID=1)** — 62

| | | |
|---|---|---|
| SENSOR DEVICE ID=1 | SENSOR TYPE IDS=1 | SENSOR DATA 1-1-1 |
| SENSOR DEVICE ID=1 | SENSOR TYPE IDS=1 | SENSOR DATA 1-1-2 |
| SENSOR DEVICE ID=1 | SENSOR TYPE IDS=2 | SENSOR DATA 1-2-1 |
| SENSOR DEVICE ID=1 | SENSOR TYPE IDS=2 | SENSOR DATA 1-2-2 |
| SENSOR DEVICE ID=2 | SENSOR TYPE IDS=3 | SENSOR DATA 2-3-1 |
| SENSOR DEVICE ID=2 | SENSOR TYPE IDS=3 | SENSOR DATA 2-3-2 |
| SENSOR DEVICE ID=2 | SENSOR TYPE IDS=3 | SENSOR DATA 2-3-3 |
| SENSOR DEVICE ID=2 | SENSOR TYPE IDS=3 | SENSOR DATA 2-3-4 |

20A

**30A**

**SENSOR DEVICE ID=1**
· SENSOR TYPE IDS=1
· SENSOR TYPE IDS=2

**NODE SSID=1**

73

**30B**

**SENSOR DEVICE ID=2**
· SENSOR TYPE IDS=3

**NODE SSID=1**

73

20B

**NODE ID=Y (NODE SSID=2)** — 62

| | | |
|---|---|---|
| SENSOR DEVICE ID=3 | SENSOR TYPE IDS=1 | SENSOR DATA 3-1-1 |
| SENSOR DEVICE ID=3 | SENSOR TYPE IDS=1 | SENSOR DATA 3-1-2 |
| SENSOR DEVICE ID=3 | SENSOR TYPE IDS=2 | SENSOR DATA 3-2-1 |
| SENSOR DEVICE ID=3 | SENSOR TYPE IDS=2 | SENSOR DATA 3-2-2 |
| SENSOR DEVICE ID=3 | SENSOR TYPE IDS=3 | SENSOR DATA 3-3-1 |
| SENSOR DEVICE ID=3 | SENSOR TYPE IDS=3 | SENSOR DATA 3-3-2 |
| SENSOR DEVICE ID=3 | SENSOR TYPE IDS=3 | SENSOR DATA 3-3-3 |
| SENSOR DEVICE ID=3 | SENSOR TYPE IDS=3 | SENSOR DATA 3-3-4 |

**30D**

**SENSOR DEVICE ID=3**
· SENSOR TYPE IDS=1
· SENSOR TYPE IDS=2
· SENSOR TYPE IDS=3

**NODE SSID=2**

73

20C

**NODE ID=Z (NODE SSID=3)** — 62

| | | |
|---|---|---|
| SENSOR DEVICE ID=4 | SENSOR TYPE IDS=3 | SENSOR DATA 4-3-1 |
| SENSOR DEVICE ID=4 | SENSOR TYPE IDS=3 | SENSOR DATA 4-3-2 |
| SENSOR DEVICE ID=4 | SENSOR TYPE IDS=3 | SENSOR DATA 4-3-3 |
| SENSOR DEVICE ID=4 | SENSOR TYPE IDS=3 | SENSOR DATA 4-3-4 |

**30F**

**SENSOR DEVICE ID=4**
· SENSOR TYPE IDS=3

**NODE SSID=3**

73

Fig.9

| PLACE | CALCULATION RESULT | TEMPERATURE : T (SENSOR TYPE IDS=1) | HUMIDITY : H (SENSOR TYPE IDS=2) |
|---|---|---|---|
| IN THE VICINITY OF THE INSTALLATION LOCATIONS OF THE SENSOR DEVICE ID=1 | Y1 (ID=1) | SENSOR DATA 1-1-1 | SENSOR DATA 1-2-1 |
| IN THE VICINITY OF THE INSTALLATION LOCATIONS OF THE SENSOR DEVICE ID=1 | Y2 (ID=1) | SENSOR DATA 1-1-2 | SENSOR DATA 1-2-2 |
| IN THE VICINITY OF THE INSTALLATION LOCATIONS OF THE SENSOR DEVICE ID=3 | Y1 (ID=3) | SENSOR DATA 3-1-1 | SENSOR DATA 3-2-1 |
| IN THE VICINITY OF THE INSTALLATION LOCATIONS OF THE SENSOR DEVICE ID=3 | Y2 (ID=3) | SENSOR DATA 3-1-2 | SENSOR DATA 3-2-2 |

# Fig.10

**10**

GRAPH DATA ACQUISITION REQUEST G

**2**

HUB

**3**

MEASURED VALUE

SENSOR DEVICE ID=2
SENSOR DEVICE ID=3
SENSOR DEVICE ID=4

MEASUREMENT TIME:hhmmss

**62**

**30A**

NODE ID=X (NODE SSID=1)

| | | |
|---|---|---|
| SENSOR DEVICE ID=1 | SENSOR TYPE IDS=1 | SENSOR DATA 1-1-1 |
| SENSOR DEVICE ID=1 | SENSOR TYPE IDS=1 | SENSOR DATA 1-1-2 |
| SENSOR DEVICE ID=1 | SENSOR TYPE IDS=2 | SENSOR DATA 1-2-1 |
| SENSOR DEVICE ID=1 | SENSOR TYPE IDS=2 | SENSOR DATA 1-2-2 |
| SENSOR DEVICE ID=2 | SENSOR TYPE IDS=3 | SENSOR DATA 2-3-1 |
| SENSOR DEVICE ID=2 | SENSOR TYPE IDS=3 | SENSOR DATA 2-3-2 |
| SENSOR DEVICE ID=2 | SENSOR TYPE IDS=3 | SENSOR DATA 2-3-3 |
| SENSOR DEVICE ID=2 | SENSOR TYPE IDS=3 | SENSOR DATA 2-3-4 |

**20A**

SENSOR DEVICE ID=1
· SENSOR TYPE IDS=1
· SENSOR TYPE IDS=2
NODE SSID=1

**30B** **73**

SENSOR DEVICE ID=2
· SENSOR TYPE IDS=3
NODE SSID=1

**73**

**62** **30D**

**20B**

NODE ID=Y (NODE SSID=2)

| | | |
|---|---|---|
| SENSOR DEVICE ID=3 | SENSOR TYPE IDS=1 | SENSOR DATA 3-1-1 |
| SENSOR DEVICE ID=3 | SENSOR TYPE IDS=1 | SENSOR DATA 3-1-2 |
| SENSOR DEVICE ID=3 | SENSOR TYPE IDS=2 | SENSOR DATA 3-2-1 |
| SENSOR DEVICE ID=3 | SENSOR TYPE IDS=2 | SENSOR DATA 3-2-2 |
| SENSOR DEVICE ID=3 | SENSOR TYPE IDS=3 | SENSOR DATA 3-3-1 |
| SENSOR DEVICE ID=3 | SENSOR TYPE IDS=3 | SENSOR DATA 3-3-2 |
| SENSOR DEVICE ID=3 | SENSOR TYPE IDS=3 | SENSOR DATA 3-3-3 |
| SENSOR DEVICE ID=3 | SENSOR TYPE IDS=3 | SENSOR DATA 3-3-4 |

SENSOR DEVICE ID=3
· SENSOR TYPE IDS=1
· SENSOR TYPE IDS=2
· SENSOR TYPE IDS=3
NODE SSID=2

**73**

**62** **30F**

**20C**

NODE ID=Z (NODE SSID=3)

| | | |
|---|---|---|
| SENSOR DEVICE ID=4 | SENSOR TYPE IDS=3 | SENSOR DATA 4-3-1 |
| SENSOR DEVICE ID=4 | SENSOR TYPE IDS=3 | SENSOR DATA 4-3-2 |
| SENSOR DEVICE ID=4 | SENSOR TYPE IDS=3 | SENSOR DATA 4-3-3 |
| SENSOR DEVICE ID=4 | SENSOR TYPE IDS=3 | SENSOR DATA 4-3-4 |

SENSOR DEVICE ID=4
· SENSOR TYPE IDS=3
NODE SSID=3

**73**

## Fig.11A

| MEASUREMENT TIME | MEASURED VALUE | | |
|---|---|---|---|
| | SENSOR DEVICE ID=2 | SENSOR DEVICE ID=3 | SENSOR DEVICE ID=4 |
| hhmmss 1 | SENSOR DATA 2-4-1 | SENSOR DATA 3-4-1 | SENSOR DATA 4-4-1 |
| hhmmss 2 | SENSOR DATA 2-4-2 | SENSOR DATA 3-4-2 | SENSOR DATA 4-4-2 |
| hhmmss 3 | SENSOR DATA 2-4-3 | SENSOR DATA 3-4-3 | SENSOR DATA 4-4-3 |
| hhmmss 4 | SENSOR DATA 2-4-4 | SENSOR DATA 3-4-4 | SENSOR DATA 4-4-4 |

## Fig.11B

MEASUREMENT TIME : hhmmss

## Fig.12

NODE DEVICE 20

| CPU 21 |
|---|
| SENSOR DATA SEARCH SECTION — 51 |
| CALCULATION SECTION — 52 |
| GRAPH CREATION SECTION — 53 |
| SELF-LOAD DETECTION SECTION — 54 |
| CONNECTION SWITCH DECISION SECTION — 55 |

| MEMORY 22 |
|---|
| SELF ID STORAGE SECTION — 61 |
| SENSOR DATA STORAGE SECTION — 62 |
| SELF-LOAD CONDITION STORAGE SECTION — 63 |

## Fig.13

CLIENT PC 10

| CPU 21 |
|---|
| FAULT DETECTION SECTION — 91 |
| INFORMATION ACQUISITION REQUEST SWITCH SECTION — 92 |

*Fig.14*

SENSOR DATA ACQUISITION REQUEST S
(SENSOR TYPE IDS=3)

| SENSOR DEVICE ID=3 | SENSOR DATA 3-3-1 |
|---|---|
| SENSOR DEVICE ID=3 | SENSOR DATA 3-3-2 |
| SENSOR DEVICE ID=3 | SENSOR DATA 3-3-3 |
| SENSOR DEVICE ID=3 | SENSOR DATA 3-3-4 |
| SENSOR DEVICE ID=4 | SENSOR DATA 4-3-1 |
| SENSOR DEVICE ID=4 | SENSOR DATA 4-3-2 |
| SENSOR DEVICE ID=4 | SENSOR DATA 4-3-3 |
| SENSOR DEVICE ID=4 | SENSOR DATA 4-3-4 |

| NODE ID=X | NO RESPONSE |
|---|---|

HUB

☆ DISCONNECTION

NODE ID=X (NODE SSID=1)

| SENSOR DEVICE ID=1 | SENSOR TYPE IDS=1 | SENSOR DATA 1-1-1 |
|---|---|---|
| SENSOR DEVICE ID=1 | SENSOR TYPE IDS=1 | SENSOR DATA 1-1-2 |
| SENSOR DEVICE ID=1 | SENSOR TYPE IDS=2 | SENSOR DATA 1-2-1 |
| SENSOR DEVICE ID=1 | SENSOR TYPE IDS=2 | SENSOR DATA 1-2-2 |
| SENSOR DEVICE ID=2 | SENSOR TYPE IDS=3 | SENSOR DATA 2-3-1 |
| SENSOR DEVICE ID=2 | SENSOR TYPE IDS=3 | SENSOR DATA 2-3-2 |
| SENSOR DEVICE ID=2 | SENSOR TYPE IDS=3 | SENSOR DATA 2-3-3 |
| SENSOR DEVICE ID=2 | SENSOR TYPE IDS=3 | SENSOR DATA 2-3-4 |

SENSOR DEVICE ID=1
• SENSOR TYPE IDS=1
• SENSOR TYPE IDS=2
NODE SSID=1

SENSOR DEVICE ID=2
• SENSOR TYPE IDS=3
NODE SSID=1

NODE ID=Y (NODE SSID=2)

| SENSOR DEVICE ID=3 | SENSOR TYPE IDS=1 | SENSOR DATA 3-1-1 |
|---|---|---|
| SENSOR DEVICE ID=3 | SENSOR TYPE IDS=1 | SENSOR DATA 3-1-2 |
| SENSOR DEVICE ID=3 | SENSOR TYPE IDS=2 | SENSOR DATA 3-2-1 |
| SENSOR DEVICE ID=3 | SENSOR TYPE IDS=2 | SENSOR DATA 3-2-2 |
| SENSOR DEVICE ID=3 | SENSOR TYPE IDS=3 | SENSOR DATA 3-3-1 |
| SENSOR DEVICE ID=3 | SENSOR TYPE IDS=3 | SENSOR DATA 3-3-2 |
| SENSOR DEVICE ID=3 | SENSOR TYPE IDS=3 | SENSOR DATA 3-3-3 |
| SENSOR DEVICE ID=3 | SENSOR TYPE IDS=3 | SENSOR DATA 3-3-4 |

SENSOR DEVICE ID=3
• SENSOR TYPE IDS=1
• SENSOR TYPE IDS=2
• SENSOR TYPE IDS=3
NODE SSID=2

NODE ID=Z (NODE SSID=3)

| SENSOR DEVICE ID=4 | SENSOR TYPE IDS=3 | SENSOR DATA 4-3-1 |
|---|---|---|
| SENSOR DEVICE ID=4 | SENSOR TYPE IDS=3 | SENSOR DATA 4-3-2 |
| SENSOR DEVICE ID=4 | SENSOR TYPE IDS=3 | SENSOR DATA 4-3-3 |
| SENSOR DEVICE ID=4 | SENSOR TYPE IDS=3 | SENSOR DATA 4-3-4 |

SENSOR DEVICE ID=4
• SENSOR TYPE IDS=3
NODE SSID=3

10  3  2  12  62  30A  30B  73  30D  30F  20A  20B  20C  73

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003085213 A

**Non-patent literature cited in the description**

- **MADDEN S et al.** TAG: a Tiny AGgregation Service for Ad-Hoc Sensor Networks. *Conference Info: OSDI,* 11 December 2002, 131-146